# EUROPEAN PATENT APPLICATION

(11) **EP 4 538 878 A2**
(43) Date of publication of application: **16.04.2025**
(21) Application number: 24201382.9
(22) Date of filing: 19.09.2024
(51) Int. Cl.: G06F 9/455, G06F 3/06

(54) **METHODS AND SYSTEMS FOR OPTIMIZING AND PROVISIONING VIRTUAL DATA STORAGE**

(30) Priority: 22.09.2023 US 202318371913
(71) Applicant: VMware LLC, Palo Alto, CA 94304 (US)
(72) Inventor: Devarakonda, Kaylan, 560076 Karnataka (IN); Ejner, Jasmine, 390024 Gujarat (IN); Ganapathi, Prasanna, 560076 Karnataka (IN); Mohanty, Ankita, 560076 Karnataka (IN); Bobba, Praneeth, 560076 Karnataka (IN); Kasha, Ravi, 560076 Karnataka (IN)
(74) Representative: Dilg, Haeusler, Schindelmann Patentanwaltsgesellschaft mbH

(57) **Abstract**

This disclosure is directed to automated computer-implemented methods and systems for optimizing and provisioning virtual data storage of virtual machines in a data center. The methods and systems attach virtual disks to virtual machines on the same datastore of the VMs. The methods and systems adjust storage space of the VDs based on storage space available to the VDs, and retains data stored in the VDs in response to receiving a request to delete the VM and the VD identifies as persistent.

## Description

### TECHNICAL FIELD

This disclosure relates to storing data in virtual disks attached to virtual machines.

### BACKGROUND

Electronic computing has evolved from primitive, vacuum-tube-based computer systems, initially developed during the 1940s, to modem electronic computing systems in which large numbers of multi-processor computer systems, such as server computers and workstations, are networked together with large-capacity data-storage devices to produce geographically distributed computing systems that provide enormous computational bandwidths and data-storage capacities. These large, distributed computing systems include data centers that are made possible by advancements in virtualization, computer networking, distributed operating systems and applications, data-storage appliances, computer hardware, and software technologies. The number and size of data centers have grown in recent years to meet the increasing demand for information technology ("IT") services, such as running applications for organizations that provide business services, web services, streaming services, and other cloud services, to millions of users each day.

Advancements in virtualization and software technologies have paved the way for software service providers to deploy and manage their applications in cloud computing environments as an on-demand delivery of IT resources over a network. However, ownership of computer and storage resources and management responsibilities of these cloud computing environments belong to different parties with different approaches in how each cloud computing environment is set up and managed. The two typical types of cloud computing environments are private clouds and public clouds. A private cloud is dedicated to a single organization. With a private cloud, all computational and data storage resources used to run software are isolated from the public and in the control of the organization. By contrast, with a public cloud, a cloud service provider manages the underlying computational and data storage resources typically in a data center. The cloud service provider is responsible for resource maintenance and guarantees availability, reliability, and security through service-level agreements. Software service providers pay cloud service providers for access to the computational and data storage resources of a data center in accordance with service-level agreements.

Public and private clouds rely on virtualization products for abstracting and provisioning processors, memory, storage and other resources into multiple virtual machines ("VMs"). Each VM has a corresponding attached virtual disk that has been provisioned according to thin or thick provisioning. With thick provisioning, the complete amount of virtual disk storage capacity is pre-allocated to a VM when the virtual disk is created. A thick-provisioned virtual disk provides the attached VM exclusive access to the storage space allocated to it in a datastore. As a result, any unused storage space of the virtual disk is not available for use by other VMs. By contrast, with thin provisioning, a thin-provisioned virtual disk is initially configured with a certain amount of storage space (e.g., zero). The size of the virtual disk storage space grows with time until a capacity limit is reached.

However, typical virtualization products cannot resolve many issues in provisioning virtual disks. For example, typical virtualization products do not detect failures in thick or thin provisioning. System administrator must manually intervene to address storage allocation issues. Typical virtualization products do not have a workflow to recover from a storage provisioning failure. There is no way to proactively detect a failure of deployment due to disks and storage. As a result, a systems administrator must initiate and wait for deployment to reach success or failure, which is time consuming, error prone, and creates a bad user experience. In addition, typical virtualization products do not allow system administrators to preserve virtual disks. For example, when a typical virtualization product deletes a VM because the VM is no longer in use, the virtual disk associated with the VM is also deleted. However, many software service providers want to preserve the data stored in the virtual disks even after the attached VMs are deleted. In other words, the lifecycle of the virtual disk needs to be independent of the lifecycle of the corresponding VM. Other virtualization products do not allow systems administrators to adjust the storage volumes dedicated to thick provisioned virtual disks. For example, a thick provisioned virtual disk of 100 GB attached to a VM occupies all 100 GB of physical storage even when the VM uses at most 8 GB of the attached virtual disk. This can cause storage issues and unnecessary storage costs for multiple VMs with similar thick provisioned virtual disks. As a result, system administrators manually monitor available space to ensure sufficient availability. Software service providers seek methods and systems that automatically optimize virtual disk usage and provisioning of virtual disk storage.

### SUMMARY

This disclosure is directed to automated computer-implemented methods and systems for optimizing and provisioning virtual data storage of a data center. The methods and systems provide additional configuration options for providing a minimum acceptable threshold ("MAT") for thick provisioning virtual disks ("VDs") attached virtual machines ("VMs") in the data center. When the amount of storage space selected for the VDs with thick provisioning in a storage profile are insufficient, methods and system would retry thick provisioning to match the MAT. If the amount storage of the reprovisioned VDs with thick provisioning is below the MAT, the provisioning type of the VDs are switched to thin provisioning. Methods and systems include that when a user selects a VM for deletion and the provisioning type of the VD is thick provisioning, the VD is switched to thin provisioning, the VM is detached and deleted, thereby retaining the data contents of the VD.

### DESCRIPTION OF THE DRAWINGS

Figure 1 shows an architectural diagram for various types of computers.
Figure 2 shows an Internet-connected distributed computer system.
Figure 3 shows cloud computing.
Figure 4 shows generalized hardware and software components of a general-purpose computer system.
Figures 5A-5B show two types of virtual machines ("VMs") and VM execution environments.
Figure 6 shows an example of an open virtualization format package.
Figure 7 shows examples of virtual data centers provided as an abstraction of underlying physical-data-center hardware components.
Figure 8 shows virtual-machine components of a virtual-data-center management server and physical servers of a physical data center.
Figure 9 shows a cloud-director level of abstraction.
Figure 10 shows virtual-cloud-connector nodes.
Figure 11 shows an example server computer used to host three containers.
Figure 12 shows an approach to implementing containers on a VM.
Figure 13 shows an example of a virtualization layer located above a physical data center.
Figure 14 shows an example of thick and thin provisioning of a datastore used by VMs.
Figure 15 is a workflow for creating VMs and attached virtual disks ("VDs") of a project.
Figures 16A-16D show examples of a graphical user interface ("GUI") displayed by a cloud automation platform.
Figure 17 shows a workflow for provisioning storage of a VD based on a minimum acceptable threshold.
Figure 18 shows an example architecture of a cloud automation platform.
Figure 19 shows an example architecture of a provisioning service of the cloud automation platform shown in Figure 18.
Figures 20-23 are workflows executed by a cloud automation platform the provisioning type of a VD from thick to thin.
Figure 24 shows an example architecture of a cloud automation platform.
Figure 25 shows an example architecture of a provisioning service of the cloud automation platform shown in Figure 24.
Figure 26 shows sequence diagrams of operations performed by modules of the cloud automation platform shown in Figure 24.

### DETAILED DESCRIPTION

This disclosure presents automated computer-implemented methods and systems for optimizing and provisioning virtual data storage in a data center. In the first subsection, computer hardware, complex computational systems, and virtualization are described. Computer-implemented methods and systems for optimizing and provisioning virtual data storage are described in a second subsection.

### Computer Hardware, Complex Computational Systems, and Virtualization

The term "abstraction" as used to describe virtualization below is not intended to mean or suggest an abstract idea or concept. Computational abstractions are tangible, physical interfaces that are implemented, ultimately, using physical computer hardware, data-storage devices, and communications systems. Instead, the term "abstraction" refers, in the current discussion, to a logical level of functionality encapsulated within one or more concrete, tangible, physically-implemented computer systems with defined interfaces through which electronically-encoded data is exchanged, process execution launched, and electronic services are provided. Interfaces may include graphical and textual data displayed on physical display devices as well as computer programs and routines that control physical computer processors to carry out various tasks and operations and that are invoked through electronically implemented application programming interfaces ("APIs") and other electronically implemented interfaces.Computer Hardware, Complex Computational Systems, and Virtualization.

The term "abstraction" as used to describe virtualization below is not intended to mean or suggest an abstract idea or concept. Computational abstractions are tangible, physical interfaces that are implemented, ultimately, using physical computer hardware, data-storage devices, and communications systems. Instead, the term "abstraction" refers, in the current discussion, to a logical level of functionality encapsulated within one or more concrete, tangible, physically-implemented computer systems with defined interfaces through which electronically-encoded data is exchanged, process execution launched, and electronic services are provided. Interfaces may include graphical and textual data displayed on physical display devices as well as computer programs and routines that control physical computer processors to carry out various tasks and operations and that are invoked through electronically implemented application programming interfaces ("APIs") and other electronically implemented interfaces.

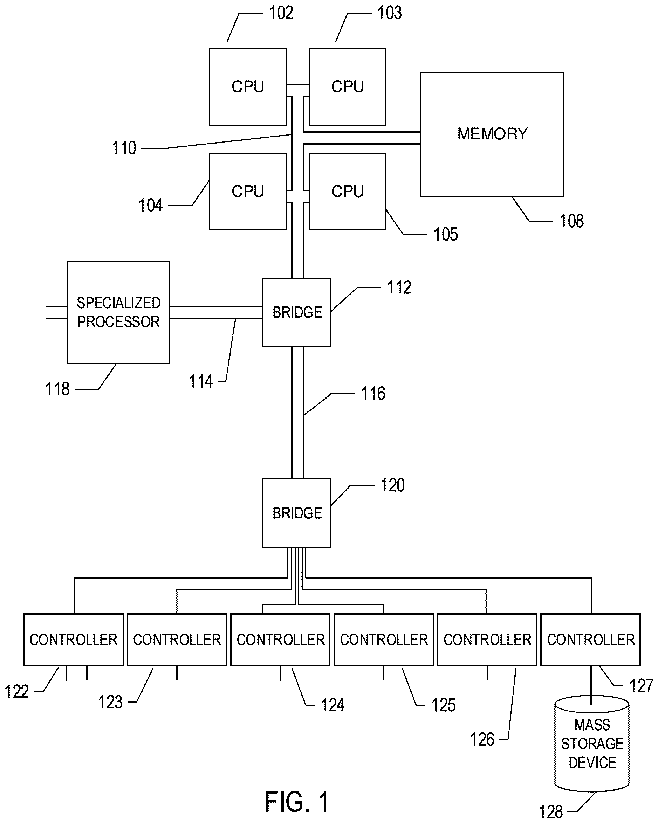

Figure 1 shows a general architectural diagram for various types of computers. Computers that receive, process, and store log messages may be described by the general architectural diagram shown in Figure 1, for example. The computer system contains one or multiple central processing units ("CPUs") 102-105, one or more electronic memories 108 interconnected with the CPUs by a CPU/memory-subsystem bus 110 or multiple busses, a first bridge 112 that interconnects the CPU/memory-subsystem bus 110 with additional busses 114 and 116, or other types of high-speed interconnection media, including multiple, high-speed serial interconnects. These busses or serial interconnections, in turn, connect the CPUs and memory with specialized processors, such as a graphics processor 118, and with one or more additional bridges 120, which are interconnected with high-speed serial links or with multiple controllers 122-127, such as controller 127, that provide access to various different types of mass-storage devices 128, electronic displays, input devices, and other such components, subcomponents, and computational devices. It should be noted that computer-readable data-storage devices include optical and electromagnetic disks, electronic memories, and other physical data-storage devices.

Of course, there are many different types of computer-system architectures that differ from one another in the number of different memories, including different types of hierarchical cache memories, the number of processors and the connectivity of the processors with other system components, the number of internal communications busses and serial links, and in many other ways. However, computer systems generally execute stored programs by fetching instructions from memory and executing the instructions in one or more processors. Computer systems include general-purpose computer systems, such as personal computers ("PCs"), various types of server computers and workstations, and higher-end mainframe computers, but may also include a plethora of various types of special-purpose computing devices, including data-storage systems, communications routers, network nodes, tablet computers, and mobile telephones.

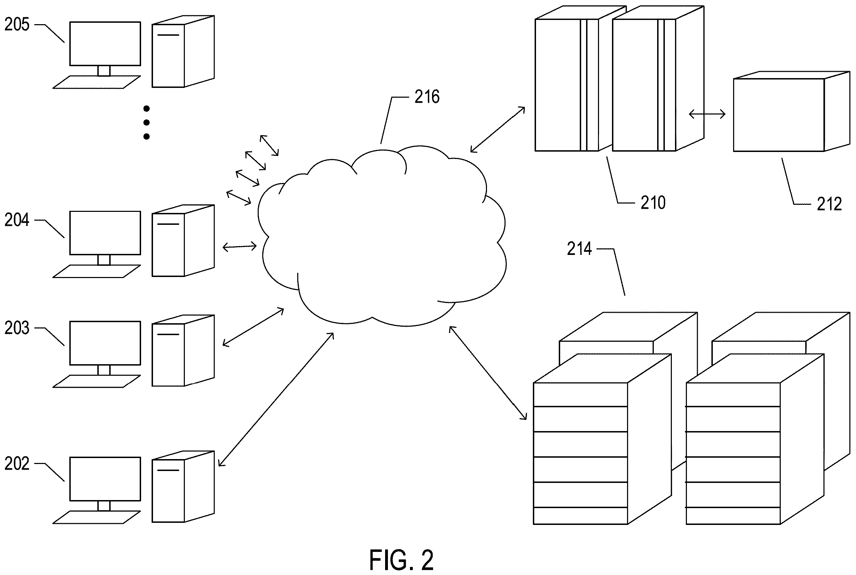

Figure 2 shows an Internet-connected distributed computer system. As communications and networking technologies have evolved in capability and accessibility, and as the computational bandwidths, data-storage capacities, and other capabilities and capacities of various types of computer systems have steadily and rapidly increased, much of modem computing now generally involves large distributed systems and computers interconnected by local networks, wide-area networks, wireless communications, and the Internet. Figure 2 shows a typical distributed system in which a large number of PCs 202-205, a high-end distributed mainframe system 210 with a large data-storage system 212, and a large computer center 214 with large numbers of rack-mounted server computers or blade servers all interconnected through various communications and networking systems that together comprise the Internet 216. Such distributed computing systems provide diverse arrays of functionalities. For example, a PC user may access hundreds of millions of different web sites provided by hundreds of thousands of different web servers throughout the world and may access high-computational-bandwidth computing services from remote computer facilities for running complex computational tasks.

Until recently, computational services were generally provided by computer systems and data centers purchased, configured, managed, and maintained by service-provider organizations. For example, an e-commerce retailer generally purchased, configured, managed, and maintained a data center including numerous web server computers, back-end computer systems, and data-storage systems for serving web pages to remote customers, receiving orders through the web-page interface, processing the orders, tracking completed orders, and other myriad different tasks associated with an e-commerce enterprise.

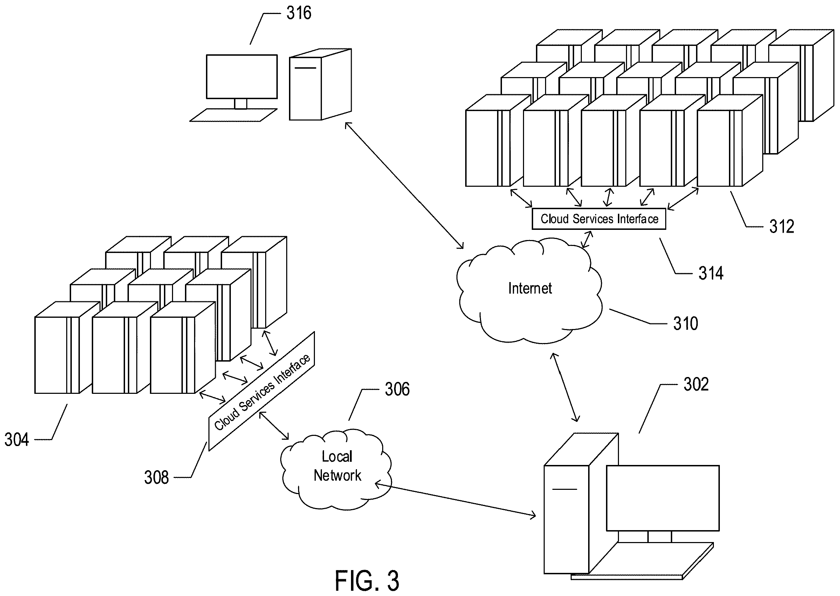

Figure 3 shows cloud computing. In the recently developed cloud-computing paradigm, computing cycles and data-storage facilities are provided to organizations and individuals by cloud-computing providers. In addition, larger organizations may elect to establish private cloud-computing facilities in addition to, or instead of, subscribing to computing services provided by public cloud-computing service providers. In Figure 3, a system administrator for an organization, using a PC 302, accesses the organization's private cloud 304 through a local network 306 and private-cloud interface 308 and accesses, through the Internet 310, a public cloud 312 through a public-cloud services interface 314. The administrator can, in either the case of the private cloud 304 or public cloud 312, configure virtual computer systems and even entire virtual data centers and launch execution of application programs on the virtual computer systems and virtual data centers in order to carry out any of many different types of computational tasks. As one example, a small organization may configure and run a virtual data center within a public cloud that executes web servers to provide an e-commerce interface through the public cloud to remote customers of the organization, such as a user viewing the organization's e-commerce web pages on a remote user system 316.

Cloud-computing facilities are intended to provide computational bandwidth and data-storage services much as utility companies provide electrical power and water to consumers. Cloud computing provides enormous advantages to small organizations without the devices to purchase, manage, and maintain in-house data centers. Such organizations can dynamically add and delete virtual computer systems from their virtual data centers within public clouds in order to track computational-bandwidth and data-storage needs, rather than purchasing sufficient computer systems within a physical data center to handle peak computational-bandwidth and data-storage demands. Moreover, small organizations can completely avoid the overhead of maintaining and managing physical computer systems, including hiring and periodically retraining information-technology specialists and continuously paying for operating-system and database-management-system upgrades. Furthermore, cloud-computing interfaces allow for easy and straightforward configuration of virtual computing facilities, flexibility in the types of applications and operating systems that can be configured, and other functionalities that are useful even for owners and administrators of private cloud-computing facilities used by a single organization.

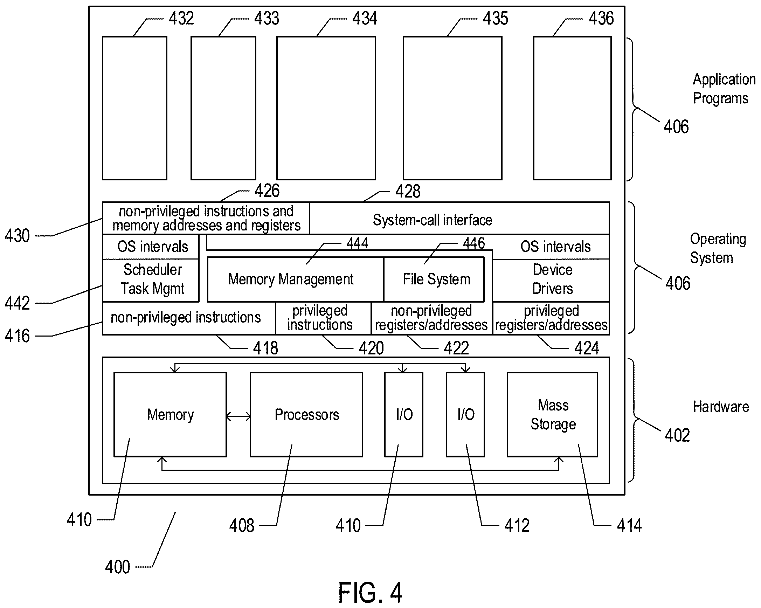

Figure 4 shows generalized hardware and software components of a general-purpose computer system, such as a general-purpose computer system having an architecture similar to that shown in Figure 1. The computer system 400 is often considered to include three fundamental layers: (1) a hardware layer or level 402; (2) an operating-system layer or level 404; and (3) an application-program layer or level 406. The hardware layer 402 includes one or more processors 408, system memory 410, various different types of input-output ("I/O") devices 410 and 412, and mass-storage devices 414. Of course, the hardware level also includes many other components, including power supplies, internal communications links and busses, specialized integrated circuits, many different types of processor-controlled or microprocessor-controlled peripheral devices and controllers, and many other components. The operating system 404 interfaces to the hardware level 402 through a low-level operating system and hardware interface 416 generally comprising a set of non-privileged computer instructions 418, a set of privileged computer instructions 420, a set of non-privileged registers and memory addresses 422, and a set of privileged registers and memory addresses 424. In general, the operating system exposes non-privileged instructions, non-privileged registers, and non-privileged memory addresses 426 and a system-call interface 428 as an operating-system interface 430 to application programs 432-436 that execute within an execution environment provided to the application programs by the operating system. The operating system, alone, accesses the privileged instructions, privileged registers, and privileged memory addresses. By reserving access to privileged instructions, privileged registers, and privileged memory addresses, the operating system can ensure that application programs and other higher-level computational entities cannot interfere with one another's execution and cannot change the overall state of the computer system in ways that could deleteriously impact system operation. The operating system includes many internal components and modules, including a scheduler 442, memory management 444, a file system 446, device drivers 448, and many other components and modules. To a certain degree, modern operating systems provide numerous levels of abstraction above the hardware level, including virtual memory, which provides to each application program and other computational entities a separate, large, linear memory-address space that is mapped by the operating system to various electronic memories and mass-storage devices. The scheduler orchestrates interleaved execution of various different application programs and higher-level computational entities, providing to each application program a virtual, stand-alone system devoted entirely to the application program. From the application program's standpoint, the application program executes continuously without concern for the need to share processor devices and other system devices with other application programs and higher-level computational entities. The device drivers abstract details of hardware-component operation, allowing application programs to employ the system-call interface for transmitting and receiving data to and from communications networks, mass-storage devices, and other I/O devices and subsystems. The file system 446 facilitates abstraction of mass-storage-device and memory devices as a high-level, easy-to-access, file-system interface. Thus, the development and evolution of the operating system has resulted in the generation of a type of multi-faceted virtual execution environment for application programs and other higher-level computational entities.

While the execution environments provided by operating systems have proved to be an enormously successful level of abstraction within computer systems, the operating-system-provided level of abstraction is nonetheless associated with difficulties and challenges for developers and users of application programs and other higher-level computational entities. One difficulty arises from the fact that there are many different operating systems that run within various different types of computer hardware. In many cases, popular application programs and computational systems are developed to run on only a subset of the available operating systems and can therefore be executed within only a subset of the different types of computer systems on which the operating systems are designed to run. Often, even when an application program or other computational system is ported to additional operating systems, the application program or other computational system can nonetheless run more efficiently on the operating systems for which the application program or other computational system was originally targeted. Another difficulty arises from the increasingly distributed nature of computer systems. Although distributed operating systems are the subject of considerable research and development efforts, many of the popular operating systems are designed primarily for execution on a single computer system. In many cases, it is difficult to move application programs, in real time, between the different computer systems of a distributed computer system for high-availability, fault-tolerance, and load-balancing purposes. The problems are even greater in heterogeneous distributed computer systems which include different types of hardware and devices running different types of operating systems. Operating systems continue to evolve, as a result of which certain older application programs and other computational entities may be incompatible with more recent versions of operating systems for which they are targeted, creating compatibility issues that are particularly difficult to manage in large distributed systems.

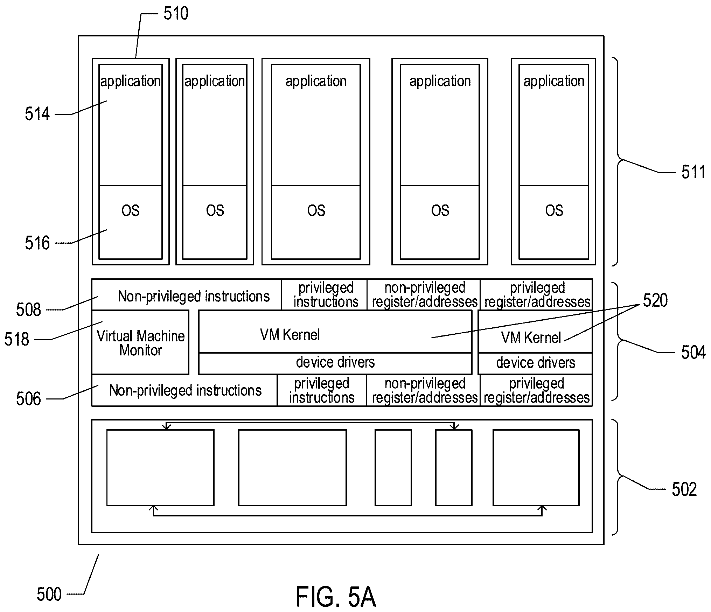

For all of these reasons, a higher level of abstraction, referred to as the "virtual machine," ("VM") has been developed and evolved to further abstract computer hardware in order to address many difficulties and challenges associated with traditional computing systems, including the compatibility issues discussed above. Figures 5A-B show two types of VM and virtual-machine execution environments. Figures 5A-B use the same illustration conventions as used in Figure 4. Figure 5A shows a first type of virtualization. The computer system 500 in Figure 5A includes the same hardware layer 502 as the hardware layer 402 shown in Figure 4. However, rather than providing an operating system layer directly above the hardware layer, as in Figure 4, the virtualized computing environment shown in Figure 5A features a virtualization layer 504 that interfaces through a virtualization-layer/hardware-layer interface 506, equivalent to interface 416 in Figure 4, to the hardware. The virtualization layer 504 provides a hardware-like interface to VMs, such as VM 510, in a virtual-machine layer 511 executing above the virtualization layer 504. Each VM includes one or more application programs or other higher-level computational entities packaged together with an operating system, referred to as a "guest operating system," such as application 514 and guest operating system 516 packaged together within VM 510. Each VM is thus equivalent to the operating-system layer 404 and application-program layer 406 in the general-purpose computer system shown in Figure 4. Each guest operating system within a VM interfaces to the virtualization layer interface 504 rather than to the actual hardware interface 506. The virtualization layer 504 partitions hardware devices into abstract virtual-hardware layers to which each guest operating system within a VM interfaces. The guest operating systems within the VMs, in general, are unaware of the virtualization layer and operate as if they were directly accessing a true hardware interface. The virtualization layer 504 ensures that each of the VMs currently executing within the virtual environment receive a fair allocation of underlying hardware devices and that all VMs receive sufficient devices to progress in execution. The virtualization layer 504 may differ for different guest operating systems. For example, the virtualization layer is generally able to provide virtual hardware interfaces for a variety of different types of computer hardware. This allows, as one example, a VM that includes a guest operating system designed for a particular computer architecture to run on hardware of a different architecture. The number of VMs need not be equal to the number of physical processors or even a multiple of the number of processors.

The virtualization layer 504 includes a virtual-machine-monitor module 518 ("VMM") that virtualizes physical processors in the hardware layer to create virtual processors on which each of the VMs executes. For execution efficiency, the virtualization layer attempts to allow VMs to directly execute non-privileged instructions and to directly access non-privileged registers and memory. However, when the guest operating system within a VM accesses virtual privileged instructions, virtual privileged registers, and virtual privileged memory through the virtualization layer 504, the accesses result in execution of virtualization-layer code to simulate or emulate the privileged devices. The virtualization layer additionally includes a kernel module 520 that manages memory, communications, and data-storage machine devices on behalf of executing VMs ("VM kernel"). The VM kernel, for example, maintains shadow page tables on each VM so that hardware-level virtual-memory facilities can be used to process memory accesses. The VM kernel additionally includes routines that implement virtual communications and data-storage devices as well as device drivers that directly control the operation of underlying hardware communications and data-storage devices. Similarly, the VM kernel virtualizes various other types of I/O devices, including keyboards, optical-disk drives, and other such devices. The virtualization layer 504 essentially schedules execution of VMs much like an operating system schedules execution of application programs, so that the VMs each execute within a complete and fully functional virtual hardware layer.

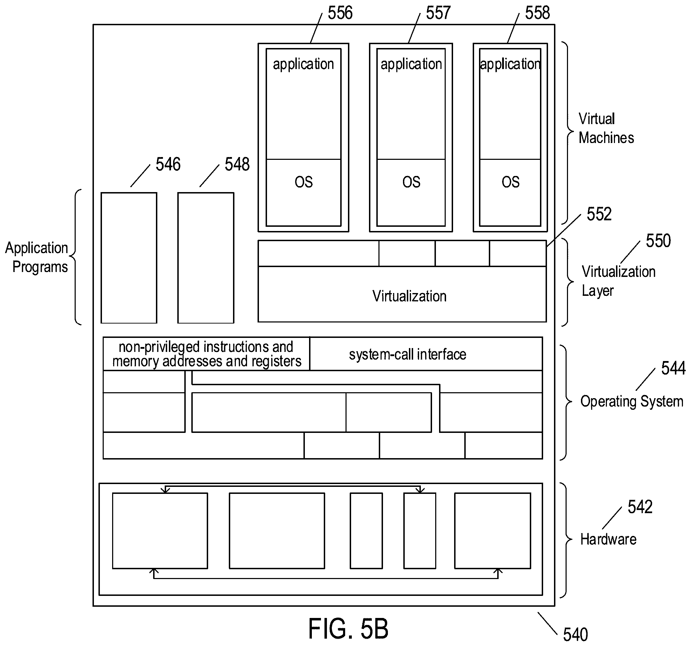

Figure 5B shows a second type of virtualization. In Figure 5B, the computer system 540 includes the same hardware layer 542 and operating system layer 544 as the hardware layer 402 and the operating system layer 404 shown in Figure 4. Several application programs 546 and 548 are shown running in the execution environment provided by the operating system 544. In addition, a virtualization layer 550 is also provided, in computer 540, but, unlike the virtualization layer 504 discussed with reference to Figure 5A, virtualization layer 550 is layered above the operating system 544, referred to as the "host OS," and uses the operating system interface to access operating-system-provided functionality as well as the hardware. The virtualization layer 550 comprises primarily a VMM and a hardware-like interface 552, similar to hardware-like interface 508 in Figure 5A. The hardware-layer interface 552, equivalent to interface 416 in Figure 4, provides an execution environment for a number of VMs 556-558, each including one or more application programs or other higher-level computational entities packaged together with a guest operating system.

In Figures 5A-5B, the layers are somewhat simplified for clarity of illustration. For example, portions of the virtualization layer 550 may reside within the host-operating-system kernel, such as a specialized driver incorporated into the host operating system to facilitate hardware access by the virtualization layer.

It should be noted that virtual hardware layers, virtualization layers, and guest operating systems are all physical entities that are implemented by computer instructions stored in physical data-storage devices, including electronic memories, mass-storage devices, optical disks, magnetic disks, and other such devices. The term "virtual" does not, in any way, imply that virtual hardware layers, virtualization layers, and guest operating systems are abstract or intangible. Virtual hardware layers, virtualization layers, and guest operating systems execute on physical processors of physical computer systems and control operation of the physical computer systems, including operations that alter the physical states of physical devices, including electronic memories and mass-storage devices. They are as physical and tangible as any other component of a computer since, such as power supplies, controllers, processors, busses, and data-storage devices.

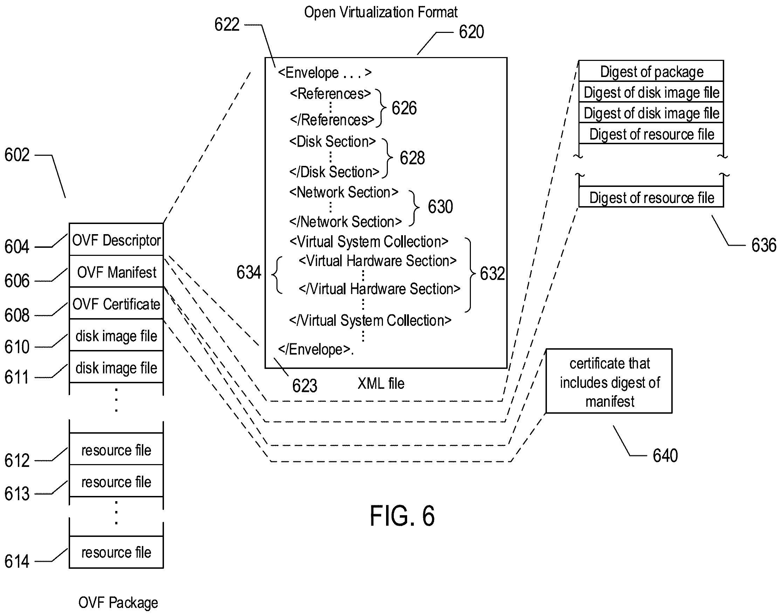

A VM or virtual application, described below, is encapsulated within a data package for transmission, distribution, and loading into a virtual-execution environment. One public standard for virtual-machine encapsulation is referred to as the "open virtualization format" ("OVF"). The OVF standard specifies a format for digitally encoding a VM within one or more data files. Figure 6 shows an OVF package. An OVF package 602 includes an OVF descriptor 604, an OVF manifest 606, an OVF certificate 608, one or more disk-image files 610-611, and one or more device files 612-614. The OVF package can be encoded and stored as a single file or as a set of files. The OVF descriptor 604 is an XML document 620 that includes a hierarchical set of elements, each demarcated by a beginning tag and an ending tag. The outermost, or highest-level, element is the envelope element, demarcated by tags 622 and 623. The next-level element includes a reference element 626 that includes references to all files that are part of the OVF package, a disk section 628 that contains meta information about all of the virtual disks included in the OVF package, a network section 630 that includes meta information about all of the logical networks included in the OVF package, and a collection of virtual-machine configurations 632 which further includes hardware descriptions of each VM 634. There are many additional hierarchical levels and elements within a typical OVF descriptor. The OVF descriptor is thus a self-describing, XML file that describes the contents of an OVF package. The OVF manifest 606 is a list of cryptographic-hash-function-generated digests 636 of the entire OVF package and of the various components of the OVF package. The OVF certificate 608 is an authentication certificate 640 that includes a digest of the manifest and that is cryptographically signed. Disk image files, such as disk image file 610, are digital encodings of the contents of virtual disks and device files 612 are digitally encoded content, such as operating-system images. A VM or a collection of VMs encapsulated together within a virtual application can thus be digitally encoded as one or more files within an OVF package that can be transmitted, distributed, and loaded using well-known tools for transmitting, distributing, and loading files. A virtual appliance is a software service that is delivered as a complete software stack installed within one or more VMs that is encoded within an OVF package.

The advent of VMs and virtual environments has alleviated many of the difficulties and challenges associated with traditional general-purpose computing. Machine and operating-system dependencies can be significantly reduced or eliminated by packaging applications and operating systems together as VMs and virtual appliances that execute within virtual environments provided by virtualization layers running on many different types of computer hardware. A next level of abstraction, referred to as virtual data centers or virtual infrastructure, provide a data-center interface to virtual data centers computationally constructed within physical data centers.

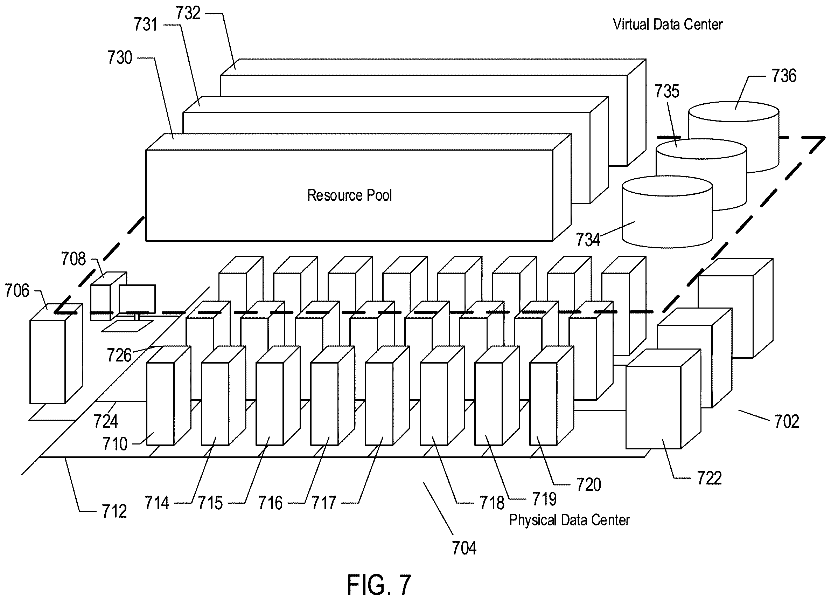

Figure 7 shows virtual data centers provided as an abstraction of underlying physical-data-center hardware components. In Figure 7, a physical data center 702 is shown below a virtual-interface plane 704. The physical data center consists of a virtual-data-center management server computer 706 and any of various different computers, such as PC 708, on which a virtual-data-center management interface may be displayed to system administrators and other users. The physical data center additionally includes generally large numbers of server computers, such as server computer 710, that are coupled together by local area networks, such as local area network 712 that directly interconnects server computer 710 and 714-720 and a mass-storage array 722. The physical data center shown in Figure 7 includes three local area networks 712, 724, and 726 that each directly interconnects a bank of eight server computers and a mass-storage array. The individual server computers, such as server computer 710, each includes a virtualization layer and runs multiple VMs. Different physical data centers may include many different types of computers, networks, data-storage systems and devices connected according to many different types of connection topologies. The virtual-interface plane 704, a logical abstraction layer shown by a plane in Figure 7, abstracts the physical data center to a virtual data center comprising one or more device pools, such as device pools 730-732, one or more virtual data stores, such as virtual data stores 734-736, and one or more virtual networks. In certain implementations, the device pools abstract banks of server computers directly interconnected by a local area network.

The virtual-data-center management interface allows provisioning and launching of VMs with respect to device pools, virtual data stores, and virtual networks, so that virtual-data-center administrators need not be concerned with the identities of physical-data-center components used to execute particular VMs. Furthermore, the virtual-data-center management server computer 706 includes functionality to migrate running VMs from one server computer to another in order to optimally or near optimally manage device allocation, provides fault tolerance, and high availability by migrating VMs to most effectively utilize underlying physical hardware devices, to replace VMs disabled by physical hardware problems and failures, and to ensure that multiple VMs supporting a high-availability virtual appliance are executing on multiple physical computer systems so that the services provided by the virtual appliance are continuously accessible, even when one of the multiple virtual appliances becomes compute bound, data-access bound, suspends execution, or fails. Thus, the virtual data center layer of abstraction provides a virtual-data-center abstraction of physical data centers to simplify provisioning, launching, and maintenance of VMs and virtual appliances as well as to provide high-level, distributed functionalities that involve pooling the devices of individual server computers and migrating VMs among server computers to achieve load balancing, fault tolerance, and high availability.

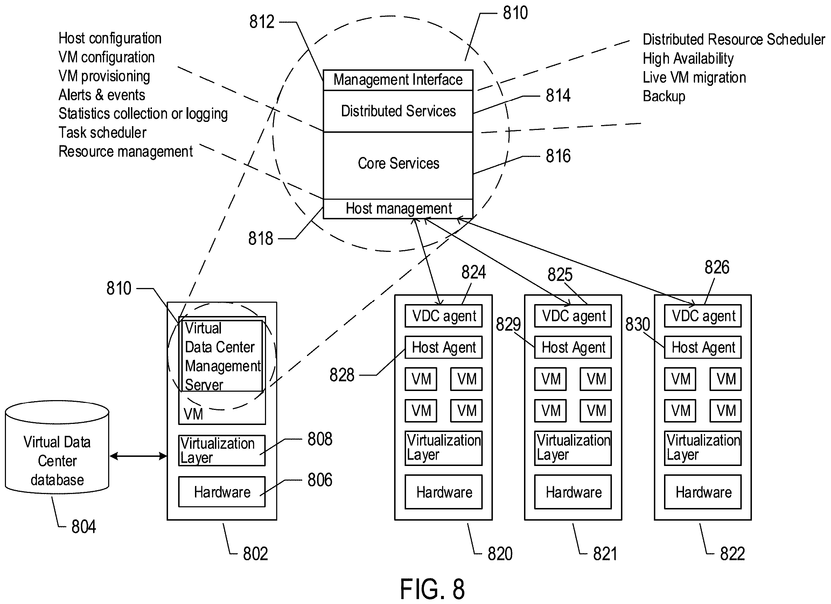

Figure 8 shows virtual-machine components of a virtual-data-center management server computer and physical server computers of a physical data center above which a virtual-data-center interface is provided by the virtual-data-center management server computer. The virtual-data-center management server computer 802 and a virtual-data-center database 804 comprise the physical components of the management component of the virtual data center. The virtual-data-center management server computer 802 includes a hardware layer 806 and virtualization layer 808 and runs a virtual-data-center management-server VM 810 above the virtualization layer. Although shown as a single server computer in Figure 8, the virtual-data-center management server computer ("VDC management server") may include two or more physical server computers that support multiple VDC-management-server virtual appliances. The virtual-data-center management-server VM 810 includes a management-interface component 812, distributed services 814, core services 816, and a host-management interface 818. The host-management interface 818 is accessed from any of various computers, such as the PC 708 shown in Figure 7. The host-management interface 818 allows the virtual-data-center administrator to configure a virtual data center, provision VMs, collect statistics and view log files for the virtual data center, and to carry out other, similar management tasks. The host-management interface 818 interfaces to virtual-data-center agents 824, 825, and 826 that execute as VMs within each of the server computers of the physical data center that is abstracted to a virtual data center by the VDC management server computer.

The distributed services 814 include a distributed-device scheduler that assigns VMs to execute within particular physical server computers and that migrates VMs in order to most effectively make use of computational bandwidths, data-storage capacities, and network capacities of the physical data center. The distributed services 814 further include a high-availability service that replicates and migrates VMs in order to ensure that VMs continue to execute despite problems and failures experienced by physical hardware components. The distributed services 814 also include a live-virtual-machine migration service that temporarily halts execution of a VM, encapsulates the VM in an OVF package, transmits the OVF package to a different physical server computer, and restarts the VM on the different physical server computer from a virtual-machine state recorded when execution of the VM was halted. The distributed services 814 also include a distributed backup service that provides centralized virtual-machine backup and restore.

The core services 816 provided by the VDC management server VM 810 include host configuration, virtual-machine configuration, virtual-machine provisioning, generation of virtual-data-center alerts and events, ongoing event logging and statistics collection, a task scheduler, and a device-management module. Each physical server computers 820-822 also includes a host-agent VM 828-830 through which the virtualization layer can be accessed via a virtual-infrastructure application programming interface ("API"). This interface allows a remote administrator or user to manage an individual server computer through the infrastructure API. The virtual-data-center agents 824-826 access virtualization-layer server information through the host agents. The virtual-data-center agents are primarily responsible for offloading certain of the virtual-data-center management-server functions specific to a particular physical server to that physical server computer. The virtual-data-center agents relay and enforce device allocations made by the VDC management server VM 810, relay virtual-machine provisioning and configuration-change commands to host agents, monitor and collect performance statistics, alerts, and events communicated to the virtual-data-center agents by the local host agents through the interface API, and to carry out other, similar virtual-data-management tasks.

The virtual-data-center abstraction provides a convenient and efficient level of abstraction for exposing the computational devices of a cloud-computing facility to cloud-computing-infrastructure users. A cloud-director management server exposes virtual devices of a cloud-computing facility to cloud-computing-infrastructure users. In addition, the cloud director introduces a multi-tenancy layer of abstraction, which partitions VDCs into tenant associated VDCs that can each be allocated to an individual tenant or tenant organization, both referred to as a "tenant." A given tenant can be provided one or more tenant-associated VDCs by a cloud director managing the multi-tenancy layer of abstraction within a cloud-computing facility. The cloud services interface (308 in Figure 3) exposes a virtual-data-center management interface that abstracts the physical data center.

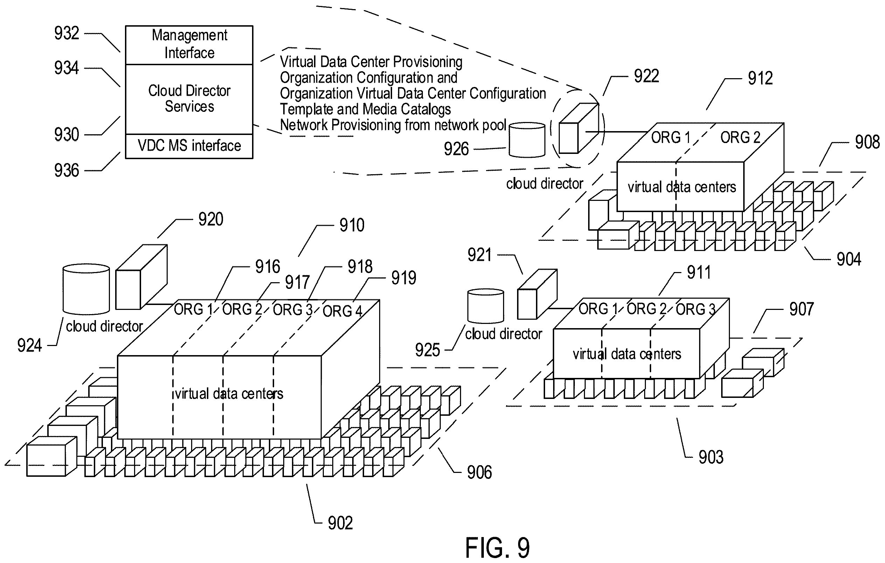

Figure 9 shows a cloud-director level of abstraction. In Figure 9, three different physical data centers 902-904 are shown below planes representing the cloud-director layer of abstraction 906-908. Above the planes representing the cloud-director level of abstraction, multi-tenant virtual data centers 910-912 are shown. The devices of these multi-tenant virtual data centers are securely partitioned in order to provide secure virtual data centers to multiple tenants, or cloud-services-accessing organizations. For example, a cloud-services-provider virtual data center 910 is partitioned into four different tenant-associated virtual-data centers within a multi-tenant virtual data center for four different tenants 916-919. Each multi-tenant virtual data center is managed by a cloud director comprising one or more cloud-director server computers 920-922 and associated cloud-director databases 924-926. Each cloud-director server computer or server computers runs a cloud-director virtual appliance 930 that includes a cloud-director management interface 932, a set of cloud-director services 934, and a virtual-data-center management-server interface 936. The cloud-director services include an interface and tools for provisioning multi-tenant virtual data center virtual data centers on behalf of tenants, tools and interfaces for configuring and managing tenant organizations, tools and services for organization of virtual data centers and tenant-associated virtual data centers within the multi-tenant virtual data center, services associated with template and media catalogs, and provisioning of virtualization networks from a network pool. Templates are VMs that each contains an OS and/or one or more VMs containing applications. A template may include much of the detailed contents of VMs and virtual appliances that are encoded within OVF packages, so that the task of configuring a VM or virtual appliance is significantly simplified, requiring only deployment of one OVF package. These templates are stored in catalogs within a tenant's virtual-data center. These catalogs are used for developing and staging new virtual appliances and published catalogs are used for sharing templates in virtual appliances across organizations. Catalogs may include OS images and other information relevant to construction, distribution, and provisioning of virtual appliances.

Considering Figures 7 and 9, the VDC-server and cloud-director layers of abstraction can be seen, as discussed above, to facilitate employment of the virtual-data-center concept within private and public clouds. However, this level of abstraction does not fully facilitate aggregation of single-tenant and multi-tenant virtual data centers into heterogeneous or homogeneous aggregations of cloud-computing facilities.

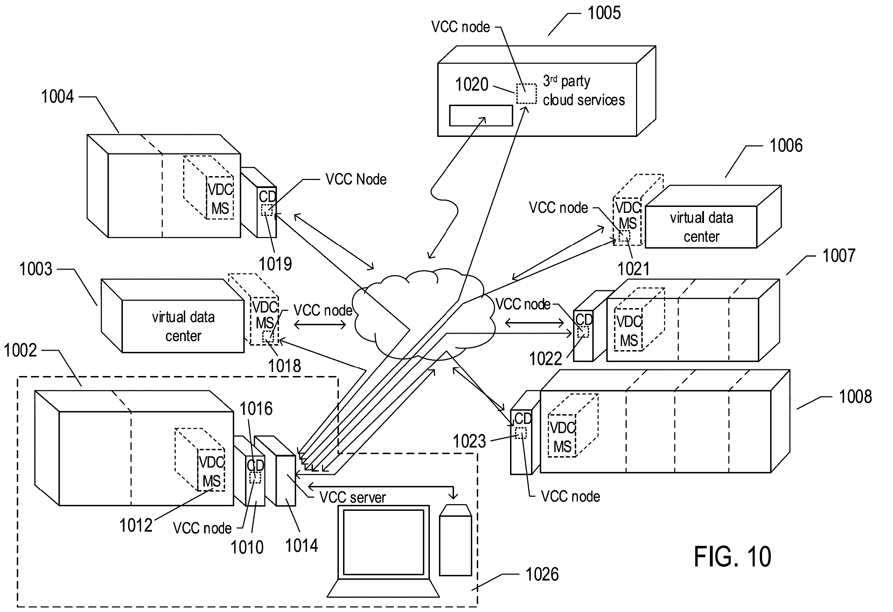

Figure 10 shows virtual-cloud-connector nodes ("VCC nodes") and a VCC server, components of a distributed system that provides multi-cloud aggregation and that includes a cloud-connector server and cloud-connector nodes that cooperate to provide services that are distributed across multiple clouds. VMware vCloud^{™} VCC servers and nodes are one example of VCC server and nodes. In Figure 10, seven different cloud-computing facilities are shown 1002-1008. Cloud-computing facility 1002 is a private multi-tenant cloud with a cloud director 1010 that interfaces to a VDC management server 1012 to provide a multi-tenant private cloud comprising multiple tenant-associated virtual data centers. The remaining cloud-computing facilities 1003-1008 may be either public or private cloud-computing facilities and may be single-tenant virtual data centers, such as virtual data centers 1003 and 1006, multi-tenant virtual data centers, such as multi-tenant virtual data centers 1004 and 1007-1008, or any of various different kinds of third-party cloud-services facilities, such as third-party cloud-services facility 1005. An additional component, the VCC server 1014, acting as a controller is included in the private cloud-computing facility 1002 and interfaces to a VCC node 1016 that runs as a virtual appliance within the cloud director 1010. A VCC server may also run as a virtual appliance within a VDC management server that manages a single-tenant private cloud. The VCC server 1014 additionally interfaces, through the Internet, to VCC node virtual appliances executing within remote VDC management servers, remote cloud directors, or within the third-party cloud services 1018-1023. The VCC server provides a VCC server interface that can be displayed on a local or remote terminal, PC, or other computer system 1026 to allow a cloud-aggregation administrator or other user to access VCC-server-provided aggregate-cloud distributed services. In general, the cloud-computing facilities that together form a multiple-cloud-computing aggregation through distributed services provided by the VCC server and VCC nodes are geographically and operationally distinct.

As mentioned above, while the virtual-machine-based virtualization layers, described in the previous subsection, have received widespread adoption and use in a variety of different environments, from personal computers to enormous, distributed computing systems, traditional virtualization technologies are associated with computational overheads. While these computational overheads have steadily decreased, over the years, and often represent ten percent or less of the total computational bandwidth consumed by an application running above a guest operating system in a virtualized environment, traditional virtualization technologies nonetheless involve computational costs in return for the power and flexibility that they provide.

While a traditional virtualization layer can simulate the hardware interface expected by any of many different operating systems, OSL virtualization essentially provides a secure partition of the execution environment provided by a particular operating system. A container is an abstraction at the application layer that packages code and dependencies together. Multiple containers can run on the same computer system and share the operating system kernel, each container running as an isolated process in the user space. One or more containers are run in pods. For example, OSL virtualization provides a file system to each container, but the file system provided to the container is essentially a view of a partition of the general file system provided by the underlying operating system of the host. In essence, OSL virtualization uses operating-system features, such as namespace isolation, to isolate each container from the other containers running on the same host. In other words, namespace isolation ensures that each application is executed within the execution environment provided by a container to be isolated from applications executing within the execution environments provided by the other containers. The containers are isolated from one another and bundle their own software, libraries, and configuration files within in the pods. A container cannot access files that are not included in the container's namespace and cannot interact with applications running in other containers. As a result, a container can be booted up much faster than a VM, because the container uses operating-system-kernel features that are already available and functioning within the host. Furthermore, the containers share computational bandwidth, memory, network bandwidth, and other computational resources provided by the operating system, without the overhead associated with computational resources allocated to VMs and virtualization layers. Again, however, OSL virtualization does not provide many desirable features of traditional virtualization. As mentioned above, OSL virtualization does not provide a way to run different types of operating systems for different groups of containers within the same host and OSL-virtualization does not provide for live migration of containers between hosts, high-availability functionality, distributed resource scheduling, and other computational functionality provided by traditional virtualization technologies.

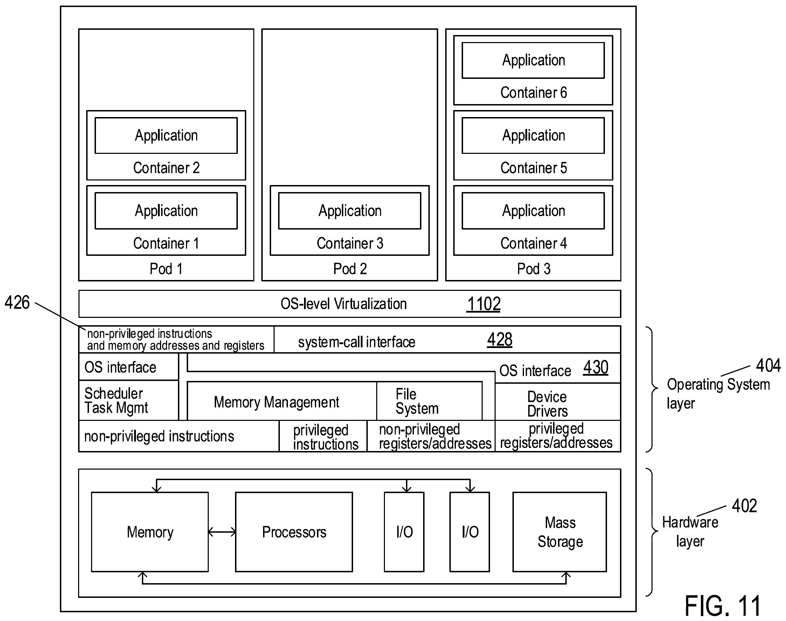

Figure 11 shows an example server computer used to host three pods. As discussed above with reference to Figure 4, an operating system layer 404 runs on the hardware layer 402 of the host computer. The operating system provides an interface, for higher-level computational entities, that includes a system-call interface 428 and the non-privileged instructions, memory addresses, and registers 426 provided by the hardware layer 402. However, unlike in Figure 4, in which applications run directly on the operating system layer 404, OSL virtualization involves an OSL virtualization layer 1102 that provides operating-system interfaces to each of the pods 1-3. In this example, applications are run separately in containers 1-6 that are in turn run in pods identified as Pod 1, Pod 2, and Pod 3. Each pod runs one or more containers with shared storage and network resources, according to a specification for how to run the containers. For example, Pod 1 runs an application 1104 in container 1 and another application 1106 in a container identified as container 2.

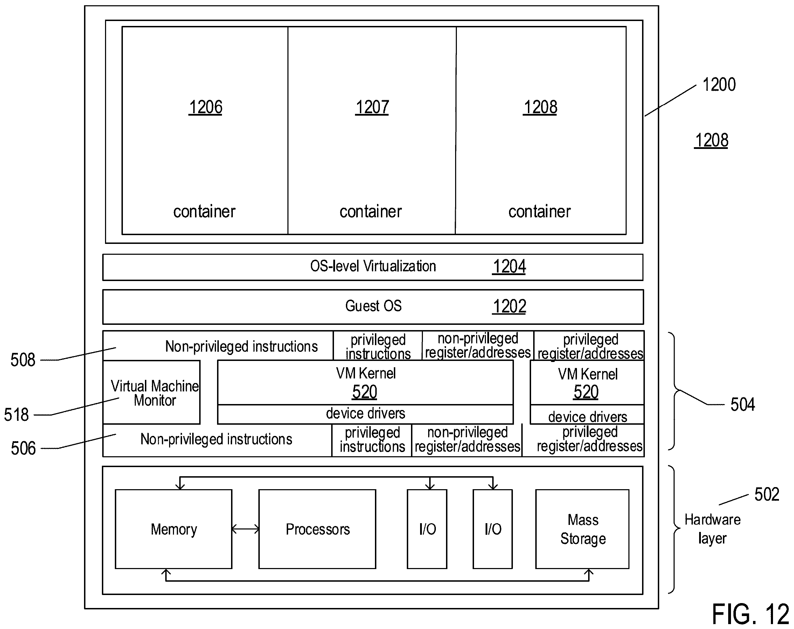

Figure 12 shows an approach to implementing the containers in a VM. Figure 12 shows a host computer similar to that shown in Figure 5A, discussed above. The host computer includes a hardware layer 502 and a virtualization layer 504 that provides a virtual hardware interface 508 to a guest operating system 1202. Unlike in Figure 5A, the guest operating system interfaces to an OSL-virtualization layer 1204 that provides container execution environments 1206-1208 to multiple application programs.

Note that, although only a single guest operating system and OSL virtualization layer are shown in Figure 12, a single virtualized host system can run multiple different guest operating systems within multiple VMs, each of which supports one or more OSL-virtualization containers. A virtualized, distributed computing system that uses guest operating systems running within VMs to support OSL-virtualization layers to provide containers for running applications is referred to, in the following discussion, as a "hybrid virtualized distributed computing system."

Running containers above a guest operating system within a VM provides advantages of traditional virtualization in addition to the advantages of OSL virtualization. Containers can be quickly booted in order to provide additional execution environments and associated resources for additional application instances. The resources available to the guest operating system are efficiently partitioned among the containers provided by the OSL-virtualization layer 1204 in Figure 12, because there is almost no additional computational overhead associated with container-based partitioning of computational resources. However, many of the powerful and flexible features of the traditional virtualization technology can be applied to VMs in which containers run above guest operating systems, including live migration from one host to another, various types of high-availability and distributed resource scheduling, and other such features. Containers provide share-based allocation of computational resources to groups of applications with guaranteed isolation of applications in one container from applications in the remaining containers executing above a guest operating system. Moreover, resource allocation can be modified at run time between containers. The traditional virtualization layer provides for flexible and scaling over large numbers of hosts within large, distributed computing systems and a simple approach to operating-system upgrades and patches. Thus, the use of OSL virtualization above traditional virtualization in a hybrid virtualized distributed computing system, as shown in Figure 12, provides many of the advantages of both a traditional virtualization layer and the advantages of OSL virtualization.

### Computer-implemented Methods and Systems for Optimizing and Provisioning Virtual Data Storage

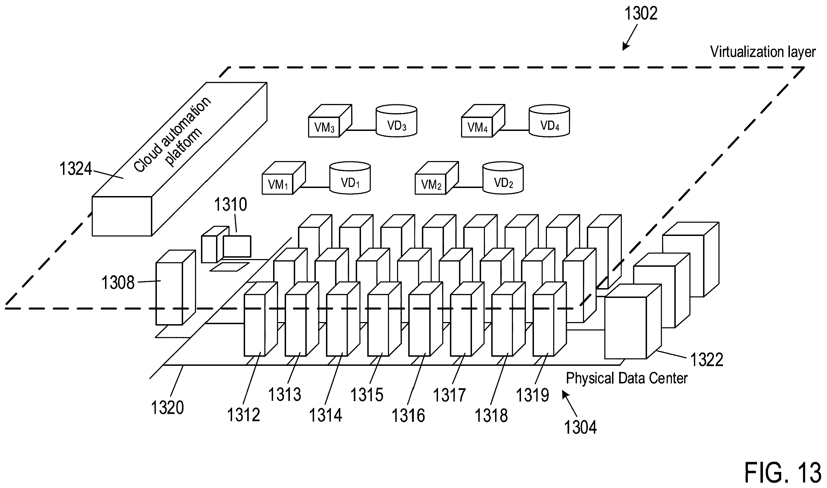

Figure 13 shows an example of a virtualization layer 1302 located above a physical data center 1304. For the sake of illustration, the virtualization layer 102 is separated from the physical data center 104 by a virtual-interface plane 106. The physical data center 104 is an example of a distributed computing system. The physical data center 104 comprises physical objects, including an administration computer system 1308, any of various computers, such as PC 1310, server computers, such as server computers 1312-1319, data-storage devices, and network devices. The server computers may be networked together to form server-computer groups within data center 1304. The example data center 1304 includes three server-computer groups each of which have eight server computers. For example, server-computer group 1320 comprises interconnected server computers 1312-1319 that are connected to a mass-storage array 1322. Within each server-computer group, certain server computers are grouped together to form a cluster that provides an aggregate set of resources (i.e., resource pool) to objects in the virtualization layer 1302. Different physical data centers may include many different types of computers, networks, data-storage systems, and devices connected according to many different types of connection topologies.

The virtualization layer 1302 includes virtual objects, such as virtual machines ("VMs"), applications, and containers, hosted by the server computers in the physical data center 1304. In the example of Figure 13, the virtualization layer 1302 includes a cloud automation platform 1324, such as Aria Automation^{™} by VMware Inc., that provides a secure, self-service multi-cloud environment with governance and resource lifecycle management across native public cloud environments and private cloud environments. The cloud automation platform 1324 automates optimization and provisioning of user-selected data storage configuration of VMs. For the sake of simplicity, the virtualization layer 1302 includes four VMs denoted by VM₁, VM₂, VM₃, and VM₄. In practice, a typical data center runs tens of thousands of VMs. Each VM is a virtual compute environment that functions as a virtual computer system with its own CPU, memory, network interface, and storage. As described above with reference to Figures 5A-5B, each VM runs on one of the server computers of the physical data center 1304 and runs its own guest operating system and functions separately from the other VMs, even if all the VMs VD₁, VD₂, VD₃, and VD₄ are run on the same server computer. The cloud automation platform 1324 enables users to configure storage for each VM in attached virtual disks ("VDs") denoted by VD₁, VD₂, VD₃, and VD₄. A VD is a software component that emulates a physical disk storage device. A VD may be a disk image, which is a computer file that contains a data structure of an actual storage device; a logical disk, which is an array of two or more physical drives that cooperatively act like a single storage device; a random-access memory ("RAM") disk; or a mapped network drive that connects to a file server.

When a VM is created, the user can use the cloud automation platform 1324 to perform thick or thin provisioning of storage space on a datastore. The cloud automation platform 1324 enables a user, such as systems administrator, developer, or software engineer, to provision VDs in cloud templates based on thin and thick provisioning. With thick provisioning, a user estimates how much storage the VM might need for the entire life cycle of the VM. The user then provisions a fixed amount of storage space to the attached VD in advance. With thin provisioning, a user selects an initial storage capacity for a VD, typically zero GB, and the VD with thin provisioning uses only as much storage space as the VD needs with the size of the VD able increase but not exceed the capacity limit.

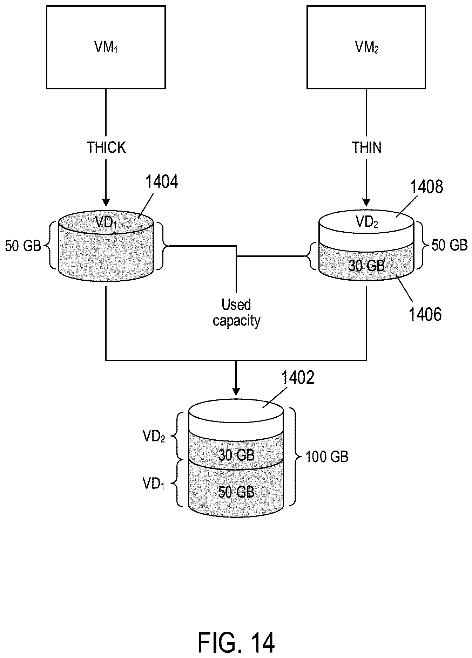

Figure 14 shows an example of thick and thin provisioning of a 100 GB datastore 1402 used by VM₁ and VM₂. In Figure 14, VD₁ of VM₁ has been provisioned with thick provisioning and allocated a full 50 GB 1404 of the 100 GB datastore 1402. With thick provisioning for VM₁, the attached thick-provisioned VD₁ occupies the entire space of 50 GB 1404 of the 100 GB database 1402 and VM₁ has exclusive access to any amount of storage space up to 50 GB of VD₁. With thin provisioning for VM₂, the user has set a capacity limit of 50 GB for VD₂. The thin-provisioned VD₂ uses only as much storage space as VM₂ needs for its operations. In this example, the thin-provisioned VD₂ has grown to 30 GB 1406, leaving 20 GB 1408 available for other storage needs, such as storage for another VM. If VD₂ requires more space, VD₂ can expand into its entire 50 GB of provisioned space.

Typical virtualization products do not detect failures in thick or thin provisioning. For example, if a user selects thick provisioning of all VDs attached to corresponding VMs, the storage capacity is allocated to the VDs even if the storage capacity of the VDs is not fully used, which creates wastage and potential problems if not enough storage space is available for other processes. As a result, systems administrators must manually intervene to address storage allocation issues. Typical virtualization products do not have a workflow to recover from a storage provisioning failure. There is no way to proactively detect a failed deployment of thick provisioned VDs. As a result, a systems administrator must initiate and wait for a provisioning deployment to reach success or failure, which is time consuming and creates a bad user experience. In addition, typical virtualization products do not allow system administrators to preserve the data in VDs. For example, when a typical virtualization product deletes (i.e., terminates) a VM because the VM is no longer in use, the attached VD is also deleted, thereby deleting the data stored in the VD. However, many software service providers want to preserve the data stored in VDs even after the attached VMs are deleted. Systems administrators have recognized that the lifecycle of VDs should be independent of the lifecycle of the attached VMs. Other virtualization products do not allow systems administrators to adjust the storage volumes dedicated to thick provisioned VDs. For example, in Figure 14, the thick-provisioned VD₁ has a storage capacity of 50 GB. VD₁ occupies all 50 GB of storage even if VM₁ uses at most 15 GB of VD₁. As a result, system administrators are forced to manually monitor available space to ensure sufficient availability.

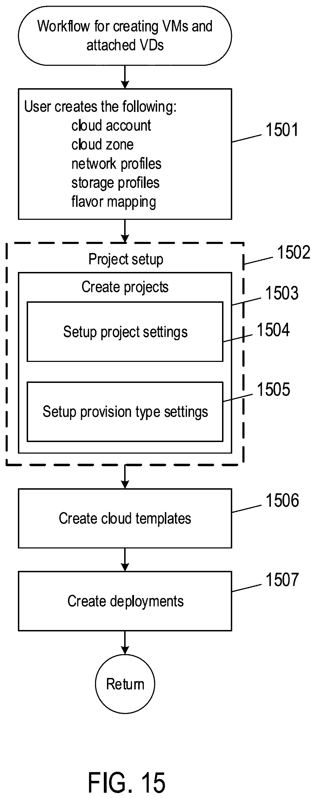

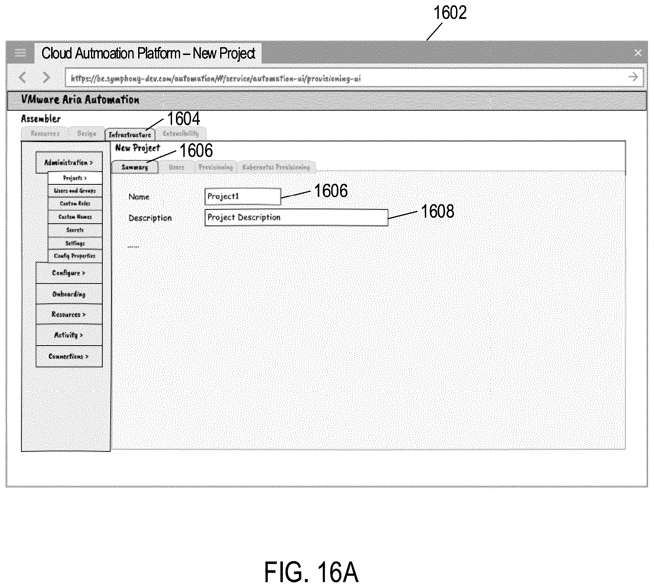

Figure 15 is a workflow for creating VMs and attached VDs. In block 1501, a user utilizes a virtualization management tool, such as vROps by VMware Inc., to create a cloud account, cloud zone, network profile, storage profile for VMs, and flavor mapping for VMs. The user creates a cloud account with a cloud service provider, such as Amazon Web Services ("AWS"). The user also creates a cloud zone, which is composed of compute resources that are specific to the user established cloud account type, such as AWS or a cloud computing virtualization platform using, for example, vSphere^{™} by VMware Inc. The user creates a network profile that contains a pool of IPv4 and/or IPv6 addresses that are assigned to VMs and are connected to port groups associated with the network profile. Network profiles also contain settings for the IP subnet, domain name server, and HTTP proxy server. The user creates storage profiles for the VMs. The storage profiles for the VDs of the VMs can be thick provisioning or thin provisioning based on the type and capacity of the storage. The user also creates flavor mappings that define target deployment sizes of the VMs for the cloud account. Flavor maps describe the deployment sizes of a user cloud account. For example, a small flavor mapping comprises 1 CPU and 2 GB of memory and a larger flavor mapping comprises 2 CPUs and 8 GB of memory. In block 1502, the cloud automation platform 1324 enables a user to create projects 1503 and set a thick provisioning minimum access threshold for thick provisioning of VDs using a graphical user interface ("GUI") described below with reference to Figures 16A-16D. The user creates projects 1503 that include a setup project settings in block 1504 and setup provision type settings in block 1505. In block 1506, cloud templates are created to enable cloud management and configure a cloud server. In block 1507, deployments are created from the cloud templates created in block 1506.

Figures 16A-16D show a GUI 1602 displayed by the cloud automation platform 1324 on a display device, such as a monitor or a console of a systems administrator. The GUI 1602 enables a user to create projects and deploy templates of projects and set limitations on acceptable use of thick provisioned VDs. The cloud automation platform 1324 includes an assembler that uses cloud adapters to connect to public and/or private clouds to create and deploy VDs attached to VMs with thick and thin provisioning as described with reference to Figures 16A-16D.

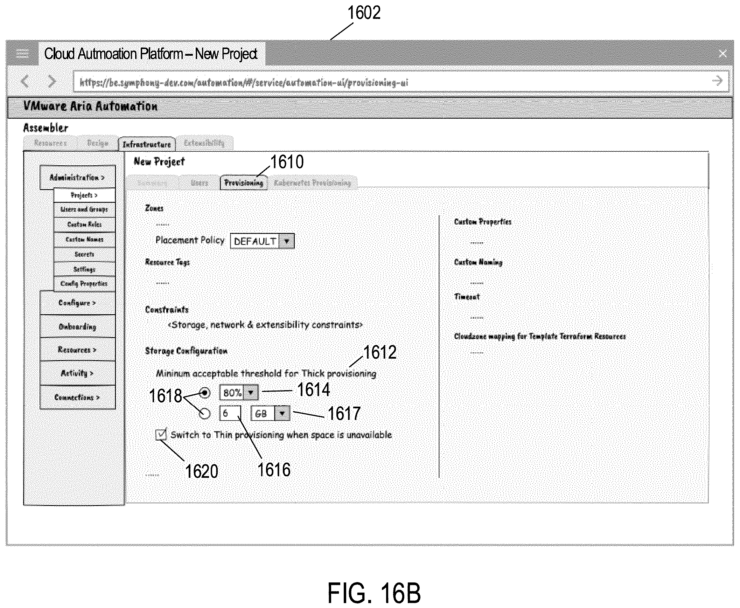

Figures 16A-16B show an example of the GUI 1602 used to set thick provisioning minimum thresholds at the project level. In Figure 16A, the GUI 1602 includes tab labeled "Infrastructure" 1604 that enables a user to create a new project. Under a tab labeled "Summary" 1606, a user can input a project name, such as "Project1," in field 1606 and a project description in field 1608. In Figure 16B, the "provisioning" tab 1610 of the GUI 1602 includes a storage configuration setup 1612 for setting minimum acceptable thresholds ("MAT") in thick provisioning. The storage configuration setup 1612 includes a field 1614 for inputting a MAT in terms of percentage of storage capacity for a VD and fields 1616 and 1617 for inputting an MAT in terms of storage volume and units for the VD. The MAT is the minimum storage space that is acceptable for thick provisioning of a VD when the full storage space originally selected for thick provisioning in the storage profile is not available. The user can select either of the project level MATs by clicking one of the buttons 1618. The storage configuration 1612 includes a field 1620 that when checked (i.e., clicked on) switches the VD from thick provisioning to thin provisioning when the available storage volume for the VD is below the MAT. For example, suppose the user selects 10 GB for thick provisioning of a VD in the storage profile of block 1501. However, only 9 GB of storage is available for thick provisioning of the VD. Because 9 GB is greater than 80% of 10 GB (i.e., 8 GB) or greater than 6 GB MAT, the VD is reset to 9 GB storage space. On the other hand, if 5 GB is available for thick provisioning of the VD, the available storage space is below both of the user-selected MATs and the VD is switched from thick provisioning to thin provisioning.

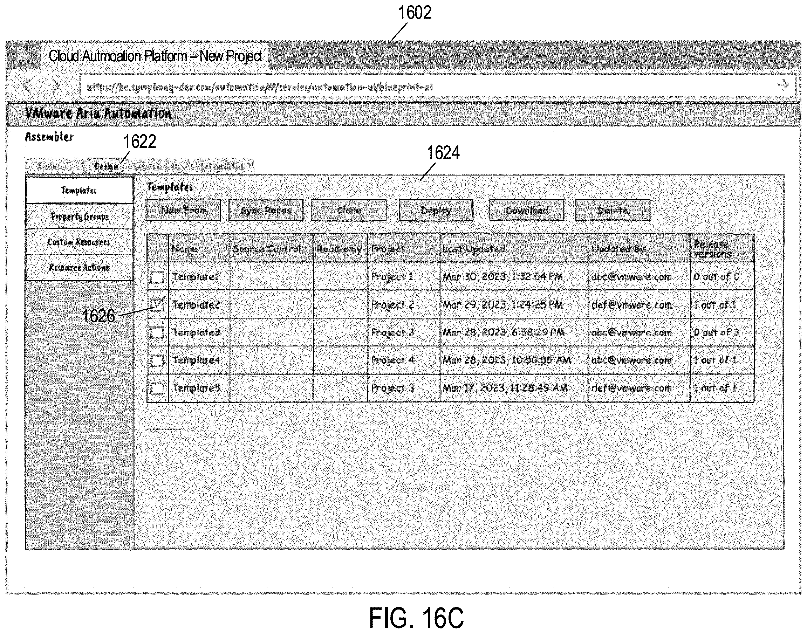

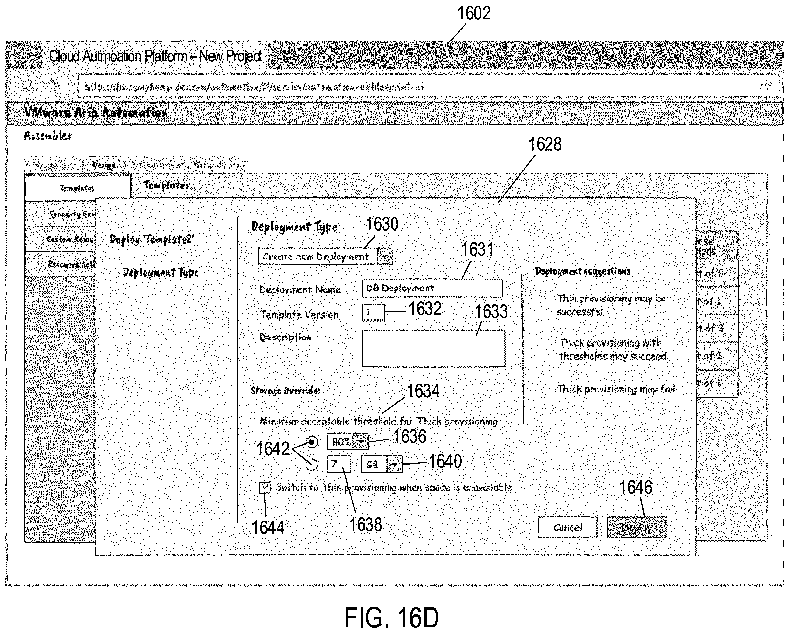

Figures 16C-16D show an example of the GUI 1602 used to set thick provisioning storage thresholds at deployment level of a project. In Figure 16C, the "design" tab 1622 of the GUI 1602 includes a templates pane 1624 that displays a table of cloud templates and corresponding projects and dates of the last time the templates were updated. In this example, the user has checked the field 1626 for cloud template "Template2," which is used to deploy "Project 2." In response to the user selecting "Template2" in Figure 16C, the GUI 1602 displays pane 1628 in Figure 16D. The pane 1628 summaries the deployment type for "Template2," select deployment type parameters in fields 1630-1633 and storage overrides 1634 for thick provisioned VDs. The storage override 1634 includes a field 1636 for inputting a deployment level MAT in terms of percentage of storage capacity for a VD and fields 1638 and 1640 for inputting the deployment level MAT in a storage volume and units assigned for the VD. The user can select either of the MATs by clicking one of the buttons 1642. The storage override 1634 includes a field 1644 that when checked (i.e., clicked on) switches a VD from thick provisioning to thin provisioning when the available storage volume for the VD is below the MAT, as described above with reference to the example storage configuration 1612 in Figure 16B. The user deploys the template with storage override 1634 by clicking the "Deploy" button 1646.

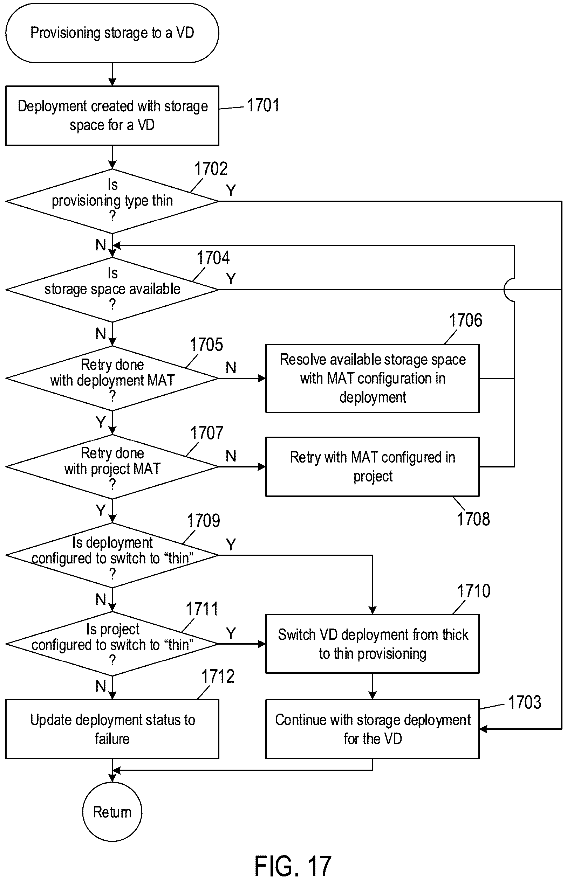

Figure 17 shows a workflow for provisioning storage of a VD executed by the cloud automation platform 1324 based on the user-selected MAT. In block 1701, when a user deploys a VM, deployment storage space is created for a VD of the VM in accordance with the storage profile. In decision block 1702, when the VD has been provisioned with thin provisioning, control flows to block 1703. In block 1703, the VD is deployed according to the storage profile. Data is stored in the VD according to the storage provisioning set in the storage profile (i.e., use the VD according to thin provisioning or thick provisioning as described above with reference to Figure 14). On the other hand, in decision block 1702, when the VD has not been provisioned with thin provisioning, by default the VD has been provisioned with thick provisioning and control flows to decision block 1704. In decision block 1704, if the full amount of storage space allocated in thick provisioning of the VD is available, control flows to block 1703. Data is stored in the VD according to the storage provisioning set in the storage profile (i.e., use the VD according to thick provisioning). If the VD is provisioned according to thick provision and the full amount of storage space allocated the VD is not available, blocks 1705-1712 adjust provisioning of storage to the VD based on the parameters input by the user at the development level in Figures 16C-16D or the parameters input by the user at the project level as described above with reference to Figures 16A-16B.

In decision block 1705, if the storage allocated to the VD has not been adjusted to the storage overrides 1634, control flows to block 1706. In other words, if the storage allocated to thick provisioning has not been adjusted according to user-selected parameters of the deployment level MAT as described in Figure 16D, control flows to block 1706. In block 1706, the available storage space allocated with thick provisioning is adjusted to the user-selected parameters described in Figure 16D and control flows back to block 1704. For example, if the user selected 80% as the MAT for thick provisioning, the storage allocated with thick provisioning is adjusted to 80% of the storage initially selected for thick provisioning in the storage profile. Alternatively, if the user selected 7 GB as the MAT for thick provisioning, the storage allocated with thick provisioning is adjusted to 7 GB for thick provisioning. Control flows back to decision block 1704. In decision block 1704, if the amount of storage space reallocated to the VD is available (e.g., 80% of the original thick provisioning storage allocation or 7 GB), control flows to block 1703 in which the VD is provisioned according to thick provisioning with the reallocated amount of storage space. Otherwise, control flows to decision block 1705. Because the deployment MAT has already been tried in decision block 1705, control flows to decision block 1707.

In decision block 1707, if the storage allocated to the VD has not been adjusted to the project level MAT, control flows to block 1708. In other words, if the storage reallocated for thick provisioning is not sufficient, control flows to block 1708. In block 1708, the reallocated storage space with thick provisioning is adjusted to the user-selected parameters project level MAT described in Figure 16B. For example, if the user selected 80% as the MAT for thick provisioning, the storage allocated with thick provisioning is adjusted to 80% of the storage selected for thick provisioning in the storage profile. Alternatively, if the user selected 6 GB as the MAT for thick provisioning, the storage allocated with thick provisioning is adjusted to 6 GB for thick provisioning. Control flows back to decision block 1704. In decision block 1704, if the amount of storage space reallocated to the VD is available, control flows to block 1703 in which the VD is provisioned according to thick provisioning with the reallocated amount of storage space. Otherwise, control flows to decision block 1705. Because the deployment MATs of decision blocks 1705 and 1707 have already been tried, control flows to decision block 1709. In decision block 1709, if the user selected switch to thin provisioning by checking field 1644 in Figure 16D, control flows block 1710. In block 1710, deployment of the VD is switched from thick provisioning to thin provisioning. Otherwise, if the user did not select switch to thin provisioning by not checking field 1644 in Figure 16D, control flows decision block 1711. In decision block 1711, if the user selected switch to thin provisioning by checking field 1620 in Figure 16B, control flows to block 1710 in which the VD is switched from thick provisioning to thin provisioning. Otherwise, if the user did not select switch to thin provisioning by not checking field 1620 in Figure 16D, control flows to block 1712. In block 1712, the deployment status is updated to failure. An alert is generated in GUI 1602 indicating that the deployment of thick provisioning failed.

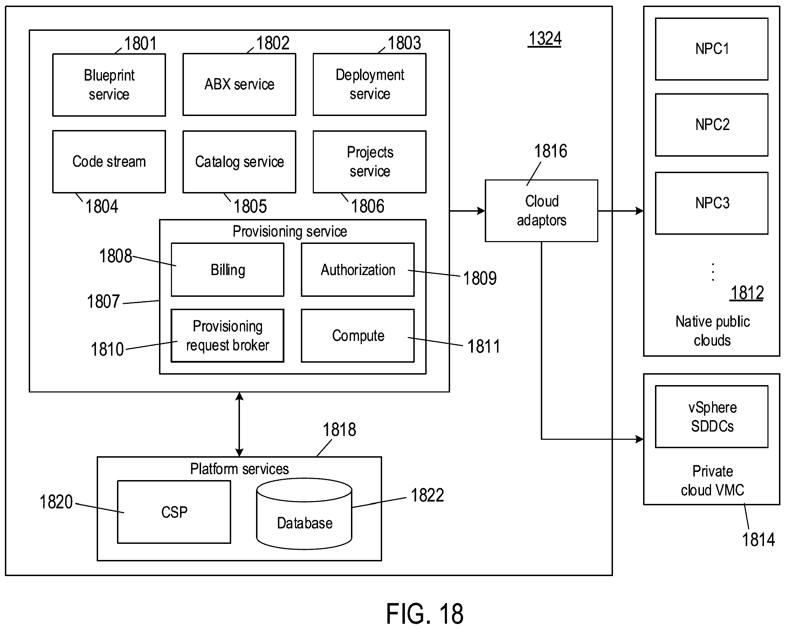

Figure 18 shows an example architecture of the cloud automation platform 1324 that displays GUI 1602 and executes the workflow of Figure 17. The cloud automation platform 1324 executes several services identified by blocks 1801-1807. The provisioning service 1807 executes customer billing 1808, user authorization 1809, and a provision request broker 1810, and computing 1811. The services 1801-1807 interface with native public clouds 1812 and a private cloud 1814 via cloud adaptors 1816. The deployment service 1803 is responsible for receiving requests for various deployments via the GUI 1602. The changes to this service include accepting additional parameters during deployment related to thick and thin provisioning types and MATs for thick provisioning. The parameters are subsequently sent to provisioning request broker 1810 for interpretation. Proactive and preventative deployment suggestions are presented to the systems administrator at the time creating a deployment from a cloud template. The projects service 1806 is the repository of the data related to projects such as basic details of each project, provisioning, and user access. Changes in this module include capturing and persisting preferences on thick and thin provisioning along with storage thresholds. The user authorization 1809 handles authorization of users with the content security platform ("CSP") 1820 and tokens and allows access and controls usage of the cloud automation platform 1324 based the roles (e.g., different levels of access) of logged in users. The provisioning service 1807 executes orchestration of provisioning and placement of VMs and Containers and related networks and storage profiles based on business groups, projects, quotas, policies, operational and health data, budgets, and costs and other application rules. The provisioning service 1807 manages the lifecycle and the provisioned resources and provides operational efficiency and optimizations for managing the resources. The provisioning service 1807 can monitor and recover from failures of provisioned resources. Other capabilities include cross-cloud discovery and elastic placement zones based on tags and criteria. The provisioning service 1807 executes the workflow of Figure 17 and uses the cloud adapters 1816 to set up and run the VDs of the VMs in the public clouds 1812 and the private clouds 1814 in accordance with the user-selected parameters in Figures 16A-17. The native public cloud 1812 includes public clouds denoted by NPC1, NPC2, and NPC3. For example, NPC1, NPC2, and NPC3 can represent AWS^{™}, Azure^{™}, and Google Cloud^{™}. The private cloud 1814 includes a software define data centers ("SDDC"). The cloud automation platform 1324 includes platform services 1818 that includes the CSP 1820 and a database 1822. Platform services 1818 are set of services that provide a platform for the services 1801-1807. CSP 1820 is a platform used to provide SaaS offerings. The database 1822 is a shared database service. The database 1822 enables microservices, such as the provisioning service 1807 and the deployment service 1803, to create separate associated databases. For example, the database 1822 may be operated using a relational database management system such as PostgresSQL.

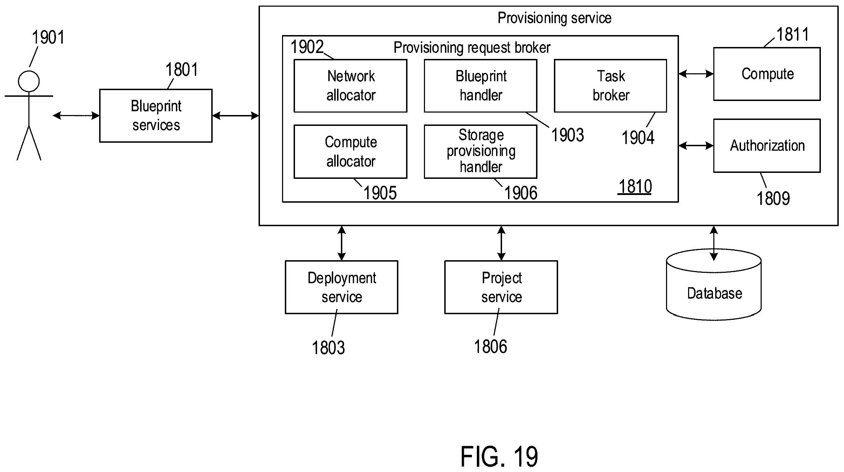

Figure 19 shows an example architecture of the provisioning service 1807. A user 1901 accesses and selects a cloud template of the blueprint services 1801 using the GUI 1602 as described above with reference to Figure 16C. The template request is forwarded to the provisioning service 1807 from the blueprint service 1801. Figure 19 reveals modules of the provisioning request broker 1810. Each module is an extension of the main provisioning service 1807 program and is dedicated to a specific function. The provisioning request broker 1810 includes a network allocator module 1902, a blueprint handler module 1903, a task broker module 1904, a computer allocator module 1905, and a storage provisioning handler module 1906. The modules of the provisioning request broker 1810 process the workflow in Figure 17 according to the parameters input via GUI 1602. For example, the network allocator 1902 provisions the network requests input by the user. The compute allocator 1905 provisions compute resources on the public clouds 1812 and the private clouds 1814. The task broker 1904 orchestrates the tasks that form the complete deployment of the project. The storage provisioning handler 1906 ensures that thick provisioning of VDs in the public clouds 1812 and the private cloud 1814 are created according to the storage configuration 1612 or the storage override 1634. The storage provisioning handler 1906 is also able to switch from thick provisioning to thin provisioning where the storage space available to the VD is below an MAT to ensure successful deployment of the VD in the public clouds 1812 and the private cloud 1814. The storage provisioning handler 1906 sends notifications to the GUI 1602 indicating that the storage allocation has been changed to match the MAT and sends notifications when the storage allocation has been switched from thick provisioning to the thin provisioning.

In another implementation, the cloud automation platform 1324 treats VDs as independent entities and avoids deleting the data stored in VDs upon termination of attached VMs. In other words, the cloud automation platform 1324 separates the lifecycle of a VD separate from the lifecycle of the attached VM. The cloud automation platform 1324 can convert a thick provisioned VD to a thin provisioned VD. For example, when the thick provisioned VD is attached to a VM on one day and the user performs deletion of the VM on a later day, the cloud automation platform 1324 VD converts the thick provisioned VD to a thin provisioned VD using the reconfigure VM reconfiguration API of vSphere^{™} by VMware, which detaches the VD from the VM. This approach involves changing the provisioning state of the VD from thick provisioning to thin provisioning and applies the changes. The attached VM is reconfigured to remain attached to the VD.

Thin provisioned VDs have several advantages over thick provisioned VDs. First, thin provisioned VDs provide storage efficiency because thin provisioned VD use only the amount of storage space that is currently needed by the attached VM, which results in significant storage savings across multiple thin provisioned VDs. By contrast, a thick provisioned VD is allocated all the storage space upfront, even if the attached VM does not use all the allocated storage space. Second, thin provisioned VDs are more flexible than thick provisioned VDs because the storage capacity of thin provisioned disks can be expanded as needed. When a thin provisioned disk is expanded, only the additional storage space is allocated, which helps to minimize downtime and reduce the risk of data loss. Third, thin provisioned VDs can be provisioned more quickly than thick provisioned VDs because the thin provisioned VDs require only the amount of storage space that is currently needed by the VM, which reduces spin-up time of deployments. Fourth, thin provisioned VDs are typically more easily backed up and recovered than thick provisioned VDs because thin provisioned VDs are smaller in size and can be more easily moved or copied to other storage locations.

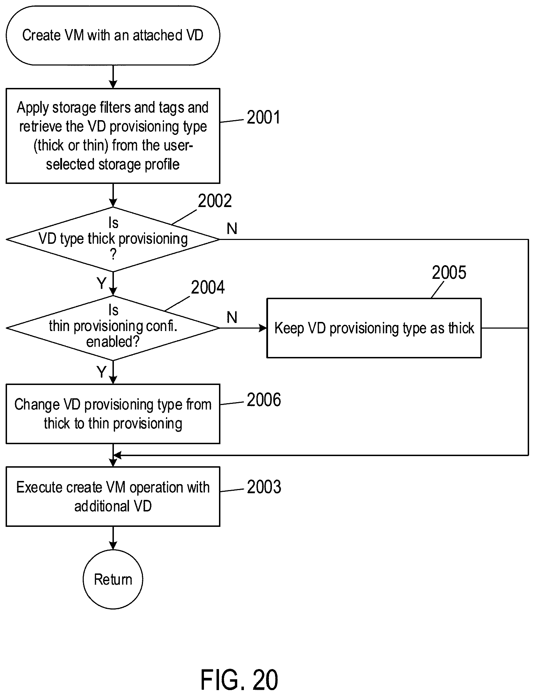

Figures 20-23 are workflows executed by the cloud automation platform 1324 to provide optimal storage utilization of VDs. Figure 20 is a workflow for creating a VM with an attached VD. In this workflow, the VD can be configured as thick provisioning or thin provisioning based on the tags applied in the storage profile input by the user in block 1501 of Figure 15. If a storage profile is not present or a simple default storage profile is input by a new user, the default provisioning type used is thick. For such unintended selection of thick provisioning type and to save storage costs and resource consumption, the workflow in Figure changes VD type from thick to thin based on user intent. In block 2001, storage filters and tags are applied and the VD provisioning type (i.e., thick or thin) of a VD to be attached to a VM is retrieved from the user-selected storage profile in block 1501 of Figure 15. In decision block 2002, if the user-selected thick provisioning, control flows to decision block 2003. Otherwise, the VD is configured with thin provisioned and control flows to block 2004 in which the create VM operation is executed with the attached VD is created with thin provisioning. In decision block 2004, if thin provisioning configuration is not enabled, control flows to block 2005 in which the configuration type of thick provisioning is maintained. In block 2003, the create VM operation is executed with the VD attached to the VM with thick provisioning. Otherwise, control flows to block 2006 in which the VD provisioning configuration is changed from thick provisioning to thin provisioning and in block 2003 the create VM operation is executed with the VD attached to the VM with thin provisioning.

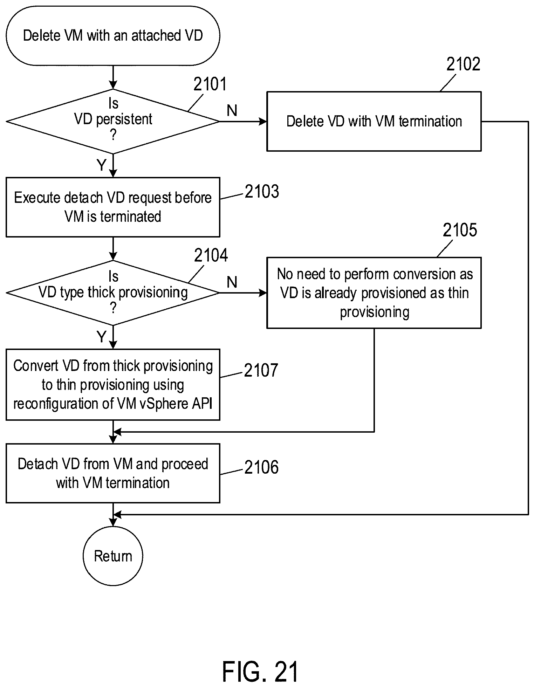

Figure 21 is a workflow for deleting a VM with an attached VD. In this workflow, the VD can be of thick provisioned or thin provisioned with the added characteristic of being persisted in storage or not. Whether the VD is persisted is storage determines whether to convert the VDs provisioning from thick to thin. A persistent VD means the VD is persisted even when the attached VM is terminated. In decision block 2101, if the attached VD is tagged as persistent, control flows to block 2103. Otherwise, control flows to block 2102 in which the VD is deleted when the attached VM is terminated. In block 2103, a detach the VD request is executed before the VM is terminated. In decision block 2104, if the VD to be detached is thick provisioned, control flows to block 2107 in which the VD is converted from thick provisioning to thin provisioning using reconfiguration of the VM reconfiguration API of vSphere^{™}. In block 2106, detachment of the VD from the VM is completed and the process of VM deletion is completed. On the other hand, if the VD to be detached is thin provisioned in block 2104, control flows to block 2105 in which the VD is retained as thin provisioned.

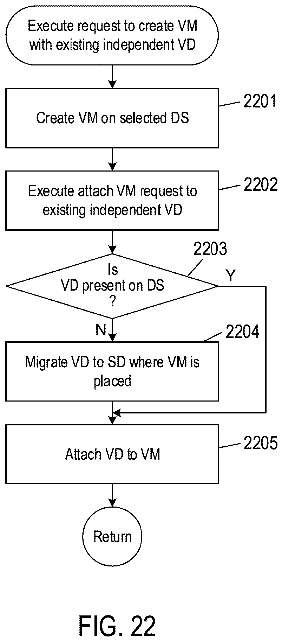

Figure 22 is a workflow for creating a VM and attaching an existing independent VD to the VM. In this workflow, a VM is created with an already deployed VD which has been transformed into a thin provisioned VD, such as via the previous workflow in Figure 21. In block 2201, a VM is created on a selected datastore ("DS"). In block 2202, a request to attach the VM to the existing independent VD is executed. In decision block 2203, if the VD is not present on the DS, control flows block 2204 in which the VD is migrated to the DS where the VM is placed. In block 2205, the VD is attached to the VM.

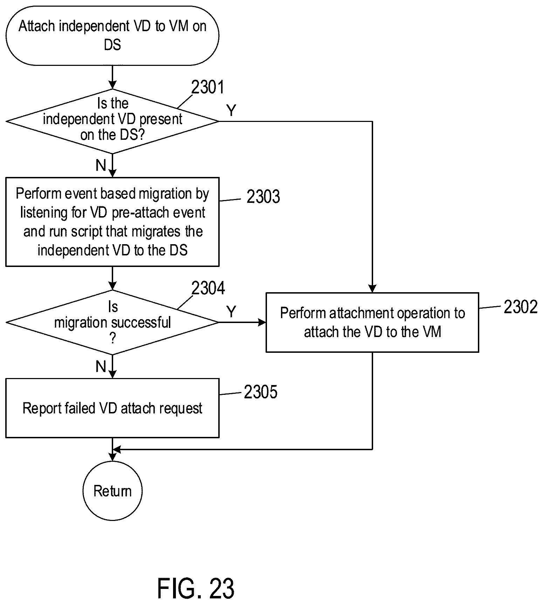

Figure 23 is a workflow for attaching an existing independent VD to an existing VM already setup on a DS. In decision block 2301, if the independent VD and the VM are present on the same DS, control flows to block 2302. In block 2302, an attachment operation is performed to attach the VD to the VM on the same DS. Otherwise, control flows to block 2303. In block 2303, event-base migration is performed by listening for VD pre-attach event. Before the VD is attached to a VM, a lifecycle event called "pre-attach" is executed. Adding the logic to pre-attach event ensures that the logic is executed before the operation of attaching the VD to the VM. A script is run to migrate the VD to the DS the VM is already set up on. In decision block 2304, if the migration is successful, control flows to block 2302. Otherwise, control flows to block 2305, an alert is generated in the GUI of the user indicating that the attachment request of the VD to the VM failed.

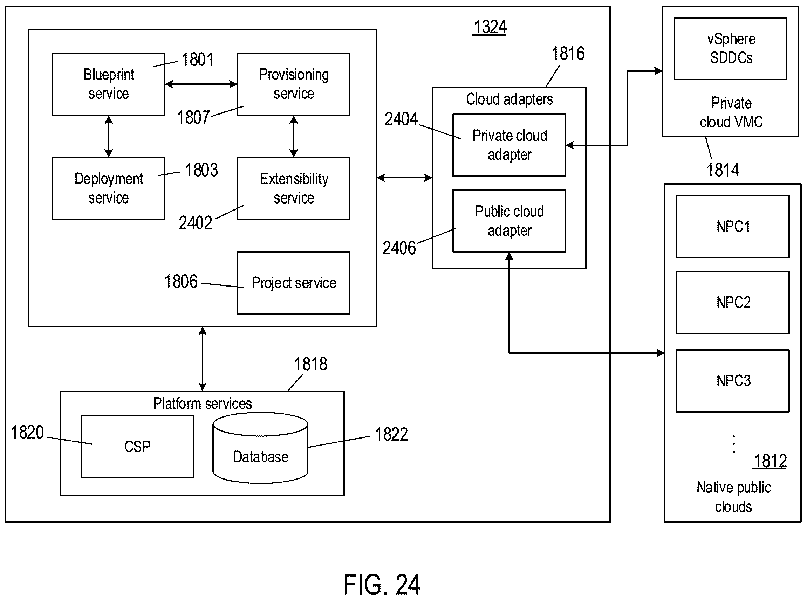

Figure 24 shows an example architecture of the cloud automation platform 1324 that provides optimal storage utilization of VDs as described above with reference to Figures 20-23. The example architecture is nearly identical to the example architecture in Figure 18. In this architecture, the cloud automation platform 1324 includes the provisioning service 1807, an extensibility service 2402, and the cloud adapters 1816 are revealed to have a private cloud adapter 2404 that interfaces with the private cloud 1814 and a public cloud adapter 2406 that interfaces with the public cloud 1812.

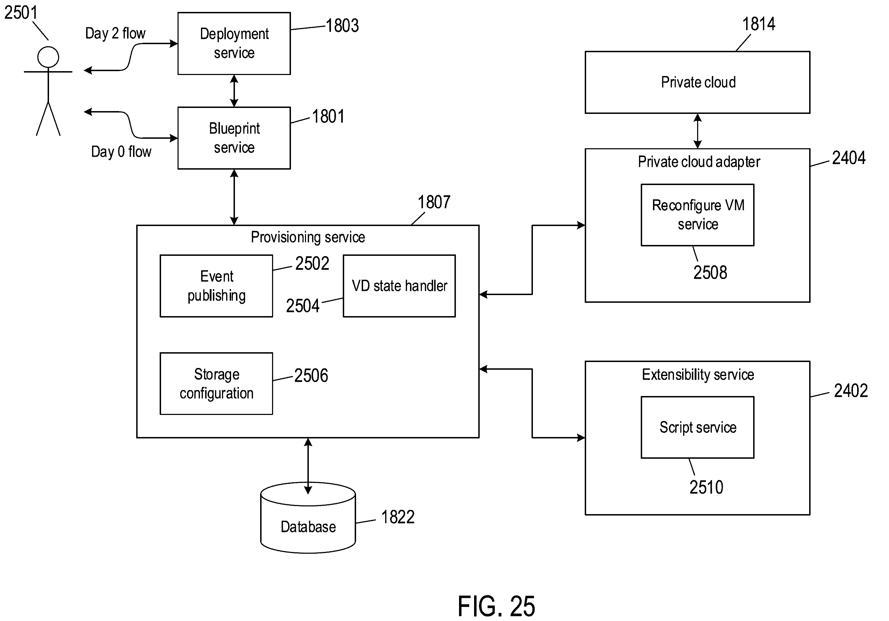

Figure 25 shows an example architecture of the provisioning service 1807. A user 2501 accesses and selects a cloud template of the blueprint services 1801 using the GUI 1601 as described above with reference to Figure 16C. The user 2501 accesses and selects at a later date, say Day 2, a cloud deployment using deployment service 1803 using the GUI 1602 as described above with reference to Figures 16C-16D. The template or deployment request is forwarded to the provisioning service 1807 from blueprint service 1801. Figure 25 reveals modules of the provisioning service 1807, extensibility service 2402, and the private cloud adapter 2404. The provisioning service 1807 includes an event publishing module 2502, a VD state handler module 2504, and a storage configuration module 2506. The event publishing module 2502 publishes a pre-VD attachment event that is executed when a VD is selected for attachment to a VM. The pre-VD attachment event is executed to migrate the VD to the DS of the VM when the VD is not located in the DS of the VM in blocks 2301 and 2303 of Figure 23. The VD state handler module 2504 performs three operations after the VD has been migrated to the DS of the VM:
1) The VD state handler module 2504 updates the state of the VD with the latest details after the VD has been migrated using EBS script during VD attachment call, which is done to correct reconciliation of the VD state stored in the database with corresponding VD object present on the cloud.
2) The VD state handler module 2504 updates the provisioning type of the VD from thick to thin when requested by the user.
3) The VD state handler module 2504 executes the operations of blocks 2004-2006 in Figure 20. If the VD state handler module 2504 identifies thin provisioning storage configuration properties in block 2004 of Figure 20 and based on the properties, the VD state handler module 2504 proceeds with changing the VD from thick provisioning to thin provisioning in block 2006 of Figure 20. Otherwise, the VD state handler module 2504 maintains the provisioning type as thick in block 2005.
The storage configuration module 2506 execute thin provisioning configuration property input by the user. The property selection is available to the user in the blueprint service 1801 while performing VM and VD and as a checkbox in delete VM in deployment and passed onto the provisioning service 1807. The private cloud adapter 2404 includes a reconfiguration VM service 2508 that converts VD provisioning type from thick to thin using VM reconfiguration API of vSphere^{™}. The extensibility service 2402 includes a script service 2510 that validates, saves, and executes a script that is attached to the extensibility service 2402 subscription configured for the pre-VD attachment event. The subscription listens for pre-VD attachment events and when such an event is detected, the script executes operations that migrates the VD to the DS where the VM is placed as described above with reference to block 2303 in Figure 23.

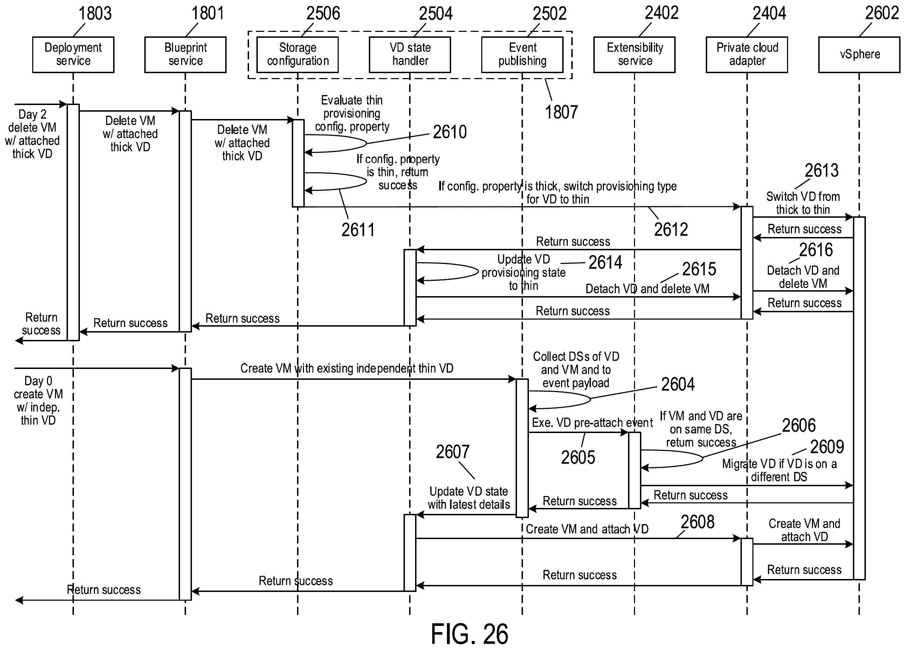

Figure 26 shows sequence diagrams of the operations performed by the modules of the provisioning service 1807, the extensibility service 2402, the private cloud adapter 2404, and VM reconfiguration API of vSphere^{™} 2602. The lower sequence diagram illustrates operations performed in response to a user's request to create a VM with an existing independent thin provisioned VD. The blueprint services 1801 receives a request to create a VM with an independent thin provisioned VD, which forwards the request to the even publishing 2502. The event publishing 2502 collects DSs of existing independent thin VD and the VM 2604. The event publishing 2502 instructs the extensibility service 2402 to execute pre-attachment event 2605 to attach the VD to the VM. If the VM and the VD are on the same DS 2606, the extensibility service 2402 returns a success to event publishing 2502 which instructs the VD state handler 2504 to update the VD with the latest details 2607. The VD state handler 2504 passes instructions to create the VM with attached VD 2608 to the private cloud adapter 2404, which, in turn, passes the same instructions to the vSphere 2602. Alternatively, if the extensibility service 2402 determines that the VM and VD are not on the same DS, the extensibility service 2402 instructs vSphere 2602 to migrate the VD to the same DS the VM runs on 2609. The upper sequence diagram illustrates operations performed in response to a user's request to delete, or terminate, a VM attached to a thick VD. The deployment service 1803 receives the request to delete the VM and forwards the request to the blueprint service 1801, which, in turn, forwards the request to the storage configuration 2506. The storage configuration 2506 evaluates the configuration property (i.e., thin or thick) of the VD 2610. If the VD is configured with thin provisioning, the storage configuration 2506 returns a success. If the VD is configured with thick provisioning, the private cloud adapter 2404 receives notification that the VD is configured with thick provisioning 2612. The private cloud adapter 2404 instructs vSphere 2602 to convert the VD from thick provisioning to thin provisioning 2613. The VD state handler 2504 updates the VD state to thin provisioning 2614 and sends instructions to the private cloud adapter 2404 to detach the VD from the VM followed by deletion of the VM 2615. The private cloud adapter 2404 sends instructions 2616 to detach the VD and delete the VM at the private cloud.

It is appreciated that the previous description of the disclosed embodiments is provided to enable any person skilled in the art to make or use the present disclosure. Various modifications to these embodiments will be apparent to those skilled in the art, and the generic principles defined herein may be applied to other embodiments without departing from the spirit or scope of the disclosure. Thus, the present disclosure is not intended to be limited to the embodiments shown herein but is to be accorded the widest scope consistent with the principles and novel features disclosed herein.

## Claims

1. An automated computer-implemented method for a method for optimizing and provisioning virtual data storage in a data center in a data center, the method comprising:
attaching a virtual disk ("VD") to a virtual machine ("VM") on a datastore of the VM;
adjusting storage space of the VD based on storage space available to the VD; and
retaining data stored in the VD in response to receiving a request to delete the VM and the VD identifies as persistent.

2. The method of claim 1 wherein attaching the VD to the VM on a datastore of the VM comprises:
collecting information about datastores of the VD and the VM;
determining whether the VD is located on a datastore that is different from the datastore of the VM;
in response to the VD being located on the datastore of the VM, attaching the VD to the VM; and
in response to the VD being located on a datastore that is different from the datastore of the VM,
listening for VD pre-attach event,
executing a script that migrates the VD to the datastore of the VM, and
attaching the VD to the VM.

3. The method of claim 1 or 2 wherein attaching the VD to the VM on the datastore of the VM comprises:
creating the VM on the datastore;
executing a request to attach the VM to the VD;
in response to the VD being located on the datastore of the VM, attaching the VD to the VM; and
in response to the VD not being located on the datastore of the VM, migrating the VD to the datastore of the VM, and attaching the VD to the VM.

4. The method of any one of the claims 1 to 3 wherein attaching the VD to the VM on a datastore of the VM comprises:
applying storage filters and tags and retrieves a provision type from a user selected storage profile;
in response to the provisioning type being thin provisioning, creating the VM and attaching the VD to the VM;
in response to the provisioning type of the VD being thick provisioning, determining whether thin provisioning is enabled; and
in response to thin provisioning being enabled,
changing the VD from thick provisioning to the thin provisioning, and
creating the VM and attaching the VD to the VM.

5. The method of any one of the claims 1 to 4 wherein retaining data stored in the VD in response to receiving a request to delete the VM comprises:
in response to the provisioning type of the VD being thick provisioning,
converting the VD from thick provisioning to thin provisioning,
detaching the VD from the VM, and
deleting the VM.

6. The method of any one of the claims 1 to 5 wherein adjusting storage space of the VD based on storage space available to the VD comprises:
in response to provisioning type of the VD being thin provisioning, continuing with storage deployment as thin provisioning; and
in response to provisioning type of the VD being thick provisioning and insufficient storage space being available to the VD,
reducing the storage space available to the VD to match a minimum acceptable threshold ("MAT"), and
switching the VD from thick provisioning to thin provisioning when the storage space available to the VD is below the MAT.

7. A computer system for a method for optimizing and provisioning virtual data storage in a data center, the computer system comprising:
one or more processors;
one or more data-storage devices; and
machine-readable instructions stored in the one or more data-storage devices that when executed using the one or more processors control the system to performance operations comprising:
attaching a virtual disk ("VD") to a virtual machine ("VM") on a datastore of the VM;
adjusting storage space of the VD based on storage space available to the VD; and
retaining data stored in the VD in response to receiving a request to delete the VM and the VD identifies as persistent.

8. The system of claim 7 wherein attaching the VD to the VM on a datastore of the VM comprises:
collecting information about datastores of the VD and the VM;
determining whether the VD is located on a datastore that is different from the datastore of the VM;
in response to the VD being located on the datastore of the VM, attaching the VD to the VM; and
in response to the VD being located on a datastore that is different from the datastore of the VM,
listening for VD pre-attach event,
executing a script that migrates the VD to the datastore of the VM, and
attaching the VD to the VM.

9. The system of claim 7 or 8 wherein attaching the VD to the VM on the datastore of the VM comprises:
creating the VM on the datastore;
executing a request to attach the VM to the VD;
in response to the VD being located on the datastore of the VM, attaching the VD to the VM; and
in response to the VD not being located on the datastore of the VM, migrating the VD to the datastore of the VM, and attaching the VD to the VM.

10. The system of any one of the claims 7 to 9 wherein attaching the VD to the VM on a datastore of the VM comprises:
applying storage filters and tags and retrieves a provision type from a user selected storage profile;
in response to the provisioning type being thin provisioning, creating the VM and attaching the VD to the VM;
in response to the provisioning type of the VD being thick provisioning, determining whether thin provisioning is enabled; and
in response to thin provisioning being enabled,
changing the VD from thick provisioning to the thin provisioning, and
creating the VM and attaching the VD to the VM.

11. The system of any one of the claims 7 to 10 wherein retaining data stored in the VD in response to receiving a request to delete the VM comprises:
in response to the provisioning type of the VD being thick provisioning,
converting the VD from thick provisioning to thin provisioning,
detaching the VD from the VM, and
deleting the VM.

12. The system of any one of the claims 7 to 11 wherein adjusting storage space of the VD based on storage space available to the VD comprises:
in response to provisioning type of the VD being thin provisioning, continuing with storage deployment as thin provisioning; and
in response to provisioning type of the VD being thick provisioning and insufficient storage space being available to the VD,
reducing the storage space available to the VD to match a minimum acceptable threshold ("MAT"), and
switching the VD from thick provisioning to thin provisioning when the storage space available to the VD is below the MAT.

13. The system of any one of the preceding claims 7 to 12, wherein the system is a cloud automated platform.
